# EUROPÄISCHE PATENTSCHRIFT

(11) **EP 0 381 660 B1**
(45) Veröffentlichungstag und Bekanntmachung des Hinweises auf die Patenterteilung: **20.10.1993**
(21) Anmeldenummer: 90890013.7
(22) Anmeldetag: 22.01.1990
(51) Int. Cl.: B01D 19/00, D21D 5/26, B04B 5/12

(54) **Verfahren und Anlage zur Behandlung von zu pumpenden Material-Gas-Mischungen sowie insbesondere eine hierfür geeignete Vorrichtung**
Process and installation for the treatment of material-gas mixtures to be pumped, and apparatus specially suited therefore
Procédé et installation de traitement de mélanges matériaux-gaz à pomper ainsi que le dispositif correspondant

(30) Priorität: 31.01.1989 AT 190/89; 31.01.1989 AT 191/89; 15.01.1990 AT 72/90
(43) Veröffentlichungstag der Anmeldung: 08.08.1990
(73) Patentinhaber: MASCHINENFABRIK ANDRITZ AKTIENGESELLSCHAFT, A-8045 Graz (AT)
(72) Erfinder: Tesch, Johann, A-8046 Graz (AT); Schieg, Rudolf, A-8010 Graz (AT)
(74) Vertreter: Collin, Hans, Dipl.-Ing. Dr.

(56) Entgegenhaltungen:
- EP-A- 0 027 179
- EP-A- 0 044 466
- DE-A- 1 653 725
- DE-A- 3 111 225
- DE-B- 1 049 363

## Beschreibung

Die Erfindung betrifft Vorrichtungen zur Abscheidung von Gas, insbesondere Luft, aus zu pumpenden, insbesondere mittel- oder hochkonsistenten, Material-Gas-Mischungen, insbesondere Faserstoffsuspensionen, die ein Gehäuse sowie einen darin gelagerten Rotor aufweist, wobei die Material-Gas-Mischungszufuhr in das Gehäuse bzw. zum Rotor oben bis seitlich und die Materialableitung am Gehäuseumfang vorgesehen sind, Anlagen unter Verwendung solcher Vorrichtungen sowie Verfahren zur Behandlung von zu pumpenden, insbesondere mittel- und hochkonsistenten, Material-Gas-Mischungen, vorzugsweise gas-, insbesondere lufthältigen Faserstoffsuspensionen, wobei eine Abtrennung des Gases vor dem Pumpvorgang vorgenommen wird.

Bekanntlich wird das Fördern von Faserstoffsuspensionen im Konsistenzbereich bis etwa 8 % atro mit herkömmlichen Stoffpumpen, bis etwa 14 % atro mit sogenannten Mittelkonsistenzpumpen bewältigt. Mittelkonsistenzpumpen besitzen ein integriertes Wasser-Luft-Regelsystem. Die am Markt befindlichen Pumpen sind anfällig, weisen einen zu engen Fördermengenbereich und unbefriedigenden Wirkungsgrad auf.

Es gibt verschiedene Gründe für auftretende Schwierigkeiten: Stoff-Fasern bilden schon in Suspensionen von niedriger Konsistenz einen verhältnismäßig stabilen Netzverband. Dieses Fasernetz kann aufgebrochen werden, wenn man die Faserstoffsuspension in einen turbulenten Zustand versetzt. Bei entsprechender Turbulenz verhält sich die Faserstoffsuspension strömungstechnisch ähnlich Wasser. Dies gilt auch für Suspensionen mittlerer Konsistenz. Man hat daher Kreiselpumpen mit einem offenen Pumpenlaufrad entworfen, das als Turbulenzgenerator wirkt. Diese Pumpe befriedigte jedoch nicht, weil die Faserstoffsuspensionen oft große Luftmengen enthalten, was bei hoher Stoffkonsistenz besonders stört: Diese Luft sammelt sich in Kreiselpumpen als Luftblase im Bereich der Nabe. Diese Blase wächst so weit an, bis sie die Pumpenförderung unterbricht.

Um die Pumpenwirkung zu verbessern, wurde daher bereits vorgeschlagen, in der Pumpe ein Entgasungssystem vorzusehen. Die Luft gelangt durch Öffnungen im Rotor in eine innerhalb des Pumpengehäuses befindliche Luftkammer, die selbst an ein Vakuumsystem angeschlossen ist. Damit kann eine gewisse Entlüftung der Suspension erreicht werden. Der Luftgehalt kann von 15 bis 20 Vol.-% auf etwa 1 bis 2 Vol.-% herabgesetzt werden.

Diese besonders ausgestalteten Pumpen haben jedoch den Nachteil, daß bei Schäden im Entgasungssystem bzw. in den eigentlichen Pumpteilen stets das Gesamtgerät ausgebaut und ersetzt werden muß.

Eine gemäß der DE-A- 32 19 740 bekannte Vorrichtung zum Entgasen von Papierstoffsuspensionen umfaßt einen langgestreckten liegenden zylindrischen Behälter, ein zu diesem Behälter paralleles Verteilungsrohr, von dem eine Mehrzahl von aufeinanderfolgenden Strahlrohren zum Einführen der Stoffsuspension in den Behälter nahe am Ende des Behälters ausgehen, ein nahe bei dem gegenüberliegenden Ende des Behälters befindliches Austrittsrohr, auf welches zu die Stoffsuspension auf den Boden des Behälters strömt, Glieder zum Konstanthalten des Spiegels der Stoffsuspension im Behälter, ein zusätzliches Austrittsrohr zum Zurückführen der im Behälter eingetretenen überschüssigen Stoffsuspension zurück in den Kreislauf und Glieder zum Erzeugen eines Unterdrucks im Behälter. Zwecks besserer Vermeidung von Konzentrationsschwankungen sind das Verteilungsrohr und die Strömung im Innern desselben der Strömung im Innern des Behälters entgegengerichtet und der Strömungsquerschnitt nimmt an Flächeninhalt im Behälter in der Richtung auf dasjenige Ende zu ab, wo sich die Strahlrohre befinden, wobei sich der abnehmende Strömungsquerschnitt zumindest über den Bereich eines Strahlrohres erstreckt. Die Leistungskapazität dieser Vorrichtungen befriedigt in diversen Fällen nicht. Sie sind auch für hochkonsistente Faserstoffsuspensionen kaum geeignet.

Demgemäß wurde eine Gasabscheidungsvorrichtung vorgeschlagen, die aus einer Rotorkammer, in der ein erstes mit Schaufeln bestücktes Laufrad angeordnet ist, einem Gasraum, in dem ein mit Schaufeln bestücktes zweites Laufrad angeordnet ist, sowie aus einer Wandung zwischen Rotorkammer und Gasraum besteht, die einen die Laufräder drehende Welle umschließenden ringförmigen Gasabführungskanal bildet, und wobei zwischen dem ersten und dem zweiten Laufrad im Gasabführungskanal mit der Welle umlaufende Schaufeln angeordnet sind und diese Schaufeln und die Schaufeln beider Laufräder eine Fläche bilden, die sich vom ersten bis zum zweiten Laufrad erstreckt. Hauptnachteile dieser Konstruktion sind die Kompliziertheit des Aufbaus und der geringe zur Verfügung stehende Raum für auszutreibendes Gas sowie die begrenzte Erfassung des Gases.

Es gibt auch Zentrifugalpumpen mit eingebauter Gasabscheidung. Abgesehen davon, daß dabei zwei bzw. drei Rotoren benutzt werden und der Aufbau kompliziert ist, besteht in diesem Fall die Gefahr, daß keine ausreichende Abtrennung von Gasen und Suspensionen erreicht wird. Außerdem muß bei auftretenden Schäden das gesamte Gerät ausgewechselt werden.

Durch die DE-A- 31 11 225 is ebenfalls eine Vorrichtung zum Trennen eines Gases von einer Fasersuspension großer bzw. hoher Konsistenz umfassend ein Gehäuse mit einer Rotorkammer bekannt geworden, die mit einem Einlaß und einem Auslaß für die Faserstoffsuspension und einem Gasauslaß versehen ist. Dabei befindet sich in der Rotorkammer ein Rotor, der in der Mitte bzw. im Zentrum offen und an einer vollen bzw. kompakten Welle angebracht sowie mit Flügeln versehen ist. Der Rotor weist unten eine quer zur Rotorachse angeordnete Platte mit einzelnen Öffnungen auf. Unterhalb der Rotorkammer ist eine weitere Kammer angeordnet, die mit den vorgenannten Öffnungen in Verbindung steht und seitlich einen Gasauslaß aufweist. Unterhalb des vorerwähnten Rotors befindet sich ein weiterer ebenfalls mit Flügeln versehener Rotor, u.zw. insbesondere in der zweiterwähnten weiteren Kammer. Der erstgenannte Rotor kann einen rohrförmigen inneren Teil mit den an ihm angebrachten Flügeln und mit Öffnungen aufweisen. Dieser rohrförmige Rotorteil ist unten mit der oben erwähnten Platte versehen und mit der Vollwelle verbunden, die auch die zweiterwähnten Flügel trägt. Die zwei mit Flügeln versehenen Rotorelemente bedeuten nicht nur einen erheblichen Herstellungsaufwand, sondern auch eine beachtliche Bauhöhe. Dazu kommt, daß die Gasabfuhr, insbesondere wegen der seitlichen Gasableitung aus der erwähnten weiteren Kammer und wegen der quer zur Rotorachse angeordneten, nur mit wenigen Oeffnungen versehenen Platte beachtlich gehemmt wird. Die Ausbildung als Flügelrotoren und der geringe Abstand zwischen den Flügelspitzen des Hauptrotors und der Wand des diesen umschließenden Gehäuses sind dazu Ursachen dafür, daß die Entmischung und damit die Entgasung nicht zufriedenstellend erfolgt. Zusammenfassend ist somit festzuhalten, daß bei dieser bekannten Vorrichtung am Rand des sich ausbildenden Gaskerns abgesaugt wird. Hier ist die Trennung von Gas und Fasern noch nicht vollständig erfolgt. Dem soll bei dieser bekannten Vorrichtung dadurch Rechnung getragen werden, daß eine weitere Gaskammer unterhalb des Rotors vorgesehen ist, in der sich die mitgerissenen Fasern vom Gas trennen sollen. Es wird hier eine spezielle Regelung dargestellt, die u.a. verhindern soll, daß der entstehende Luftkern so klein wird, daß ein großer Anteil an Fasern mit dem Gas mitgerissen wird. Trotz des komplizierten Aufbaus und des beachtlichen Herstellungsaufwands ist jedoch der Trennungseffekt nicht befriedigend.

Ziel der Erfindung ist es, die vorgeschilderten Nachteile zu vermeiden, wobei von einer Vorrichtung zur Abscheidung von Gas, insbesondere Luft, aus zu pumpenden, insbesondere mittel- oder hochkonsistenten, Material-Gas-Mischungen, insbesondere Faserstoffsuspensionen, ausgegangen wird, die ein Gehäuse sowie einen darin gelagerten Rotor aufweist, wobei die Material-Gas-Mischungszufuhr in das Gehäuse bzw. zum Rotor oben bis seitlich und die Materialableitung am Gehäuseumfang vorgesehen sind. Dabei geht es auch um die problemlose Bewältigung eines Konsistenzbereiches von 0 bis etwa 15 % atro. Außerdem soll ebenfalls eine Anpassung an verschiedene Stoffarten und -konsistenzen, ein Funktionieren nach längerem Stillstand und Regelmöglichkeiten für ein instationäres Fördern erreicht werden.

Zwecks Erreichung dieser Ziele wird erfindungsgemäß bei der zuletzt angegebenen Vorrichtung zwecks vom Pumpvorgang getrennter Vorbereitung einer Material-Gas-Mischung vor ihrer Einbringung in eine Pumpe ein einziger käfigartig ausgebildeter Rotor vorgesehen und im Rotorzentrum ein axial verlaufendes, mit mindestens einer Öffnung ausgestattetes Gasentnahmerohr angeordnet, an dessen von der Mischungszufuhr abgewandten Ende sich ein Gasentnahmekanal anschließt. Damit wird vor allem - z.B. im Gegensatz zur Ausbildung nach der DE-A- 31 11 225 - eine vollständige Trennung von Gas bzw. Luft und Fasern erreicht, ohne daß eine weitere Gaskammer sowie eine spezielle Regelung wie beim Bekannten erforderlich ist. Hauptgrund dafür ist, daß bei der Erfindung nicht am Rand des sich bildenden Gas- bzw. Luftkerns, sondern in der Achse der Rotation und somit des Gaskerns abgesaugt wird. Da sich hier praktisch keine Fasern mehr befinden, wird ein Mitreißen der Fasern mit abgesaugter Luft bzw. abgesaugtem Gas vermieden.

Die erfindungsgemäße Vorrichtung läßt sich also generell zur Abscheidung von Gas, insbesondere Luft, aus, insbesondere mittel- und hochkonsistenten, Material-Gas-Mischungen, insbesondere Faserstoffsuspensionen, verwenden. Sie besteht im allgemeinen aus einem zweckmäßig etwa zylindrisch ausgebildeten Gehäuse sowie wie oben erwähnt aus einem darin gelagerten Rotor, wobei im Betrieb die Rotorachse bevorzugt etwa lotrecht steht sowie die Material-Gas-Mischungszufuhr in das Gehäuse bzw. zum Rotor zweckmäßig oben und die Materialableitung am Gehäuseumfang vorgesehen sind und wobei etwa im Rotorzentrum ein axial verlaufendes, mit Öffnungen ausgestattetes, z.B. sich mit dem Rotor mitdrehendes, Gas-, insbesondere Luft-Entnahmerohr angeordnet ist, an dessen axial verlaufenden Innenraum unten bzw. am von der Materialzufuhr abgewandten Ende ein Gas-, insbesondere Luftentnahmekanal anschließt, der vorteilhaft mit einer Vakuumpumpe verbunden bzw. verbindbar ist. Vorteilhaft ist erfindungsgemäß die Rotorlänge bzw. -höhe wesentlich größer als der Rotoraußendurchmesser, so daß beim Anschluß der Vorrichtung an der Unterseite eines die Material-Gas-Mischung, insbesondere die Faserstoffsuspension, enthaltenden, zu entleerenden Behälters dieser Rotor zum Teil in diesen Behälter reicht. Die Gasentnahme im Bereich der Achse des käfigartigen Rotors kann in verschiedener Form erfolgen: Erfindungsgemäß kann es von Vorteil sein, wenn das vorerwähnte Gasentnahmerohr am oberen Ende eine Öffnung aufweist und gegenüber dem Rotor feststeht. Dabei kann erfindungsgemäß der Gasentnahmekanal gegenüber der rotierenden Welle des Rotors abgedichtet und feststehend sein. Es kann auch die erfindungsgemäße Variante bevorzugt werden, daß das Gasentnahmerohr mit Öffnungen im Mantel versehen ist und mit dem Rotor mitdrehend angeordnet ist. Günstigerweise weist dabei der käfigartige Rotor einen einzigen Käfig aus queraxial stehenden ringförmigen, insbesondere sternartigen, Scheiben sowie aus am Scheibenumfang, insbesondere den Sternarmen bzw. Sternspitzen, vorteilhaft versenkt, befestigten achsparallelen Leisten auf.

Zweckmäßigerweise ist diese Vorrichtung durch dreiarmige Sterne mit daran befestigten Hochkantleisten mit etwa radial gerichteten Seiten-Langflächen gekennzeichnet, deren in radialer Richtung gemessene Breite wesentlich geringer ist als die Länge des Rotoraußenradius.

Dabei kann der Rotor etwa queraxial zu seiner Drehachse stehende kreisringförmige Scheiben bzw. vorteilhaft wenigstens zum Teil spiralförmig angeordnete, an vorzugsweise achsparallelen Leisten befestigte Kreisringsektoren aufweisen, wobei letzteres die Entgasung besonders fördert. Es ist von Vorteil, wenn Kreisringsektoren mit daran befestigten Hochkantleisten mit etwa radial gerichteten Seiten-Langflächen vorgesehen werden und wenn im Zentrum des Rotors, etwa beginnend vom inneren Gas-, insbesondere Luft-Entnahmerohrende an ein sich achsparallel erstreckender, vorteilhaft dreiarmiger, einen Bestandteil des Rotors bildender, also im Betrieb mit dem Rotor-Käfig mitrotierender Flügelstern befindet, der im Durchmesser wesentlich kleiner ist als der Rotoraußendurchmesser. Dann kann sich im Zentrum besonders gut eine Gassäule ausbilden, wobei dies dann besonders unterstützt wird, wenn während der Rotation die Mischung ein Paraboloid bildet. Eine vorteilhafte Ausbildung der Gassäule wird unterstützt, wenn außerdem gemäß der weiteren Ausgestaltung der Erfindung, insbesondere zwecks getrennter Entgasung der Material-Gas-Mischung, insbesondere Faserstoffsuspension, vor ihrer Einbringung in eine Pumpe ein einziger, käfigartig ausgebildeter, vornehmlich als hochtouriges Rührorgan dienender, Rotor in einem Gehäuse mit einem im Verhältnis zum Rotoraußendurchmesser wesentlich größeren Innendurchmesser gelagert ist und sich an den Innenraum des Gas-Entnahmerohrs unten unmittelbar der Gas-Entnahmekanal mit der Rotordrehachse etwa zusammenfallend, insbesondere damit fluchtend, anschließt; beispielsweise verhält sich der Innendurchmesser des Rotorgehäuses zum Außendurchmesser des Rotors wie 3 zu 1 bis 1,5 zu 1, vorteilhaft wie etwa 2,5 zu 1. Die Gasabtrennung kann auch günstig beeinflußt werden, wenn der Rotor im, insbesondere zylindrischen, Gehäuse exzentrisch gelagert ist.

Gemäß der weiteren Ausgestaltung der Erfindung ist zwischen dem Außenmantel des Gasentnahmerohrs und der im Bereich dieses Rohres hohl ausgebildeten Welle des Rotors sowie deren Lager bzw. Dichtungen ein insbesondere zylindrischer Raum vorgesehen, der unmittelbar bzw. mittelbar mit einer Kühlwasserversorgung bzw. der Vakuumpumpe in Verbindung steht, so daß das für die Kühlung der Dichtung zur Abdichtung des gegenüber der Rotorwelle feststehenden Gas-, insbesondere Luftentnahmerohrs benötigte Kühlwasser, das vorteilhaft auch der Kühlung und der Schmierung des mit der Welle mitrotierenden, das Gas-, insbesondere Luft-Entnahmerohr führenden Gleitlagers und in weiterer Folge als Spülwasser für das Luftentnahmerohr dient, während des Betriebes zuführbar und schließlich von der Vakuumpumpe absaugbar ist.

Bevorzugt ist eine erfindungsgemäße Anlage unter Verwendung der vorgeschilderten erfindungsgemäßen Vorrichtungen in der Weise ausgestaltet, daß eine Pumpe, insbesondere eine Kreiselpumpe, mit einem vom Gehäuse der Entgasungsvorrichtung getrennten Gehäuse vorgesehen wird, wobei zweckmäßigerweise der Pumpe und der Entgasungsvorrichtung getrennte Antriebsmotoren zugeordnet sind. Bei Schäden genügt es somit nunmehr, entweder die eigentliche Pumpe oder die Entgasungsvorrichtung auszuwechseln. Dazu kommt eine erhöhte Betriebssicherheit der eigentlichen Pumpe.

An sich ist bereits eine Anlage bekannt geworden, bei der zwischen zwei Pumpen zur Förderung von Papiermasse ein Hydrozyklon zur Entfernung von Verunreinigungen und ein geschlossener Entgasungsbehälter vorgesehen sind, wobei in letzterem die Entgasung lediglich auf Grund des Unterdrucks erfolgt. Eine Rotationsbewegung der fraglichen Masse im Entgasungsbehälter ist somit nicht vorhanden, so daß die erfindungsgemäßen Erfolge nicht eintreten können.

Die Anlage nach der Erfindung läßt dann besonders günstige Resultate zustandekommen, wenn an die Entgasungsvorrichtung mit etwa lotrechter Rotationsachse des zu entgasenden Gemisches eine Vakuumpumpe angeschlossen ist. Dies kann an der Unterseite bzw. an der von der Mischungszufuhr abgewandten Seite, vorzugsweise am Boden des Sonderbehälters einer Entgasungsvorrichtung mit etwa lotrechter Rotationsachse des zu entgasenden Gemisches geschehen, wobei die Gasabfuhr in lotrechter Richtung erfolgt. Es sind aber auch Gasableitungen in Richtungen zwischen der Lotrechten und der Waagrechten möglich, wobei die Vakuumpumpe bzw. deren Zuleitung schräg am Boden des Sonderbehälters oder schräg bzw. waagrecht an dessen Seitenwand angeschlossen sind. Beispielsweise kann gemäß der weiteren Ausgestaltung der Erfindung der Speicherbehälter für die Material-Gas-Mischung, insbesondere die gashaltige Faserstoffsuspension, z.B. ein etwa lotrechter Fallturm, unmittelbar am Gehäuse der Entgasungsvorrichtung, z.B. an dessen Oberseite, aber auch an anderen Stellen dieses Gehäuses angeschlossen bzw. unmittelbar damit verbunden sein; so kann der Materialfluß je nach praktischer Sachlage besonders günstig gestaltet werden.

Zur einleitenden Spülung des Systems wird zweckmäßigerweise die Entgasungsvorrichtung und die Vakuumpumpe über entsprechende Leitungen bzw. Ventile mit einer Spülwasserquelle verbunden. Für die Absicherung eines einwandfreien Betriebes der Anlage werden bevorzugt die Entgasungsvorrichtung und die Vakuumpumpe an eine Kühlmediumquelle, insbesondere an eine Kühlwasserquelle, angeschlossen.

Eine gute Funktion wird vor allem dann sichergestellt, wenn die Evakuierung bzw. das Absaugen des Gases, insbesondere der Luft, aus dem Sonderbehälter, insbesondere der Achse der Rotationsbewegung der Material-Gas-Mischung bzw. aus einer hiezu dienenden Entgasungsvorrichtung in Abhängigkeit von der Leistungsaufnahme des die Rotation der Material-Gas-Mischung im Sonderbehälter erzeugenden Motors geregelt wird. Dabei ist zweckmäßigerweise der einzuregelnde Sollwert für die Leistungsaufnahme 10-75 %, insbesondere 20-40 %, vorteilhaft etwa 30 %, niedriger als derjenige im Betrieb mit gas- bzw. luftfreier Suspension bzw. Wasser.

Ein weitestgehend wartungsfreier Betrieb läßt sich erfindungsgemäß erreichen, wenn ein elektrisches Steuer- bzw. Regelgerät, insbesondere ein durch ein Computerprogramm vorprogrammiertes automatisches Steuer- bzw. Regelgerät, vorgesehen ist, das mit dem Pumpenmotor bzw. dessen Tourenmesser sowie dessen Tourenzahlregelung, mit dem Motor der Entgasungsvorrichtung, mit der Vakuumpumpe, mit dem Spülventil, mit dem Vakuumbewässerungsventil, mit dem Vakuumstellventil, mit dem Füllhöhemesser des Speicherbehälters, mit dem Ventil für die Zufuhr der Mischung in den Speicherbehälter und dem Messer der Pumpmenge verbunden ist.

Die Entgasung wird besonders wirkungsvoll, wenn die Entgasungsvorrichtung nebst dem Sondergehäuse aus einem darin gelagerten, vornehmlich als hochtouriges Rührorgan dienenden Rotor besteht, wobei im Betrieb z.B. die Achse dieses Rotors je nach Einbauerfordernis etwa lotrecht bis etwa waagrecht steht sowie vorteilhaft die Material-Gas-Mischungszufuhr in das Sondergehäuse bzw. zum Rotor oben bis seitlich und die Materialableitung bevorzugt am Gehäuseumfang vorgesehen sind, wobei nur ein einziger, käfigartig ausgebildeter Rotor in einem, zweckmäßig etwa zylindrisch ausgebildeten Gehäuse gelagert ist und etwa im Rotorzentrum ein axial verlaufendes, mit Öffnungen ausgestattetes, zweckmäßig sich mit dem Rotor mitdrehendes, Gas-, insbesondere Luft-Entnahmerohr angeordnet ist, an dessen axial verlaufenden Innenraum unten bzw. am von der Mischungszufuhr abgewandten Ende mit der Rotordrehachse etwa zusammenfallend, insbesondere damit fluchtend, ein Gas-, insbesondere Luftentnahmekanal anschließt, der vorteilhaft mit der Vakuumpumpe verbunden bzw. verbindbar ist, wobei vorteilhaft die Rotorlänge bzw. -höhe, insbesondere wesentlich, größer ist als der Rotoraußendurchmesser, so daß beim Anschluß der Vorrichtung an einen die Material-Gas-Mischung, insbesondere die Faserstoffsuspension, enthaltenden, zu entleerenden Behälter dieser Rotor zum Teil in diesen Behälter reicht. Diese Wirkung läßt sich weiter verstärken, wenn der käfigartige Rotor einen einzigen Käfig aus queraxial stehenden ringförmigen, am Umfang insbesondere sternartigen Scheiben sowie aus am Scheibenumfang, insbesondere den Sternarmen bzw. Sternspitzen, vorteilhaft versenkt, befestigten achsparallelen Leisten besteht und wenn dreiarmige Sterne mit daran befestigten Hochkantleisten mit etwa radial gerichteten Seiten-Langflächen vorgesehen werden, deren in radialer Richtung gemessene Breite wesentlich geringer ist als die Länge des Rotoraußenradius.

Dabei wird die Materialförderung und Entgasung besonders unterstützt, wenn, zweckmäßig im Bereich der Zufuhr der Material-Gas-Mischung bzw. in dem in den zu entleerenden Behälter reichenden Rotorteil sternartige Scheiben, insbesondere durch Verdrehung der Sternarme, propellerartig geformt sind und der Rotor im Gehäuse exzentrisch gelagert ist. Eine besonders wirksame Entgasung läßt sich erreichen, wenn der Rotor im Gehäuse exzentrisch gelagert wird.

Eine praktisch günstige Gestaltung einer Entgasungsanlage ergibt sich dadurch, daß erfindungsgemäß das Gas-, insbesondere Luft-Entnahmerohr aus einem innen befindlichen mit Öffnungen versehenen Stützrohr, aus einem darübergezogenen Siebrohr und aus einem über dieses gezogenen im Bereich der Stützrohröffnungen Öffnungen, insbesondere Großöffnungen, aufweisenden Halterohr besteht sowie daß vorteilhaft das Gas-, insbesondere Luftentnahmerohr am vom Anschluß an die Vakuumpumpe abliegenden Ende, vorteilhaft oben, verschlossen ist. Vorteilhaft ist mit dem Rotor, insbesondere mit seinem unteren Ende, ein Fliehkraftregler, ein Fliehkraftventil bzw. ein Magnetventil od.dgl. verbunden, der bzw. das das Vakuum ab einer vorgegebenen Rotordrehzahl wirksam werden läßt.

Gemäß der weiteren Ausgestaltung der Erfindung ist ein vorprogrammierbares automatisches elektrisches Steuer- bzw. Regelgerät vorgesehen, das mit einem Strommesser des Rotormotors und mit einem Vakuumregelventil verbunden ist, wodurch die Evakuierung bzw. das Absaugen des Gases, insbesondere der Luft, aus dem Gas-, insbesondere Luftentnahmerohr, insbesondere der Achse der Rotationsbewegung der Material-Gas-Mischung in Abhängigkeit von der Leistungsaufnahme des die Rotation der Material-Gas-Mischung im den Rotor enthaltenden Gehäuse erzeugenden Motors regelbar ist. Dabei ist mit Vorteil das Steuer- bzw. Regelgerät auf einen einzuregelnden Sollwert für die Leistungsaufnahme des die Rotation der Material-Gas-Mischung erzeugenden Motors programmiert, der um 10-75 %, insbesondere 20-40 %, vorteilhaft etwa 30 %, niedriger ist als derjenige im Betrieb mit gas- bzw. luftfreier Suspension bzw. Wasser. Außerdem ist es erfindungsgemäß von Vorteil, wenn eine elektrische Steuer- bzw. Regeleinrichtung, insbesondere ein durch ein Computerprogramm vorprogrammiertes Steuer- bzw. Regelgerät, vorgesehen ist, das mit dem Pumpenmotor bzw. dessen Tourenmesser sowie dessen Tourenzahlregelung, mit dem Motor der Entgasungsvorrichtung, mit der Vakuumpumpe, mit dem Spülventil, mit dem Vakuumbewässerungsventil, mit dem Vakuumstellventil, mit dem Füllhöhenmesser des Speicherbehälters, mit dem Ventil für die Zufuhr der Mischung in den Speicherbehälter und dem Messer der Pumpmenge verbunden ist.

Eine weitere erfindungsgemäße Anlage kann dadurch gekennzeichnet sein, daß, insbesondere zwecks getrennter Vorbereitung einer Faserstoffsuspension vor ihrer Einbringung in eine Pumpe, ein einziger, käfigartig ausgebildeter, vornehmlich als hochtouriges Rührorgan dienender, Rotor in einem, zweckmäßig etwa zylindrisch ausgebildeten, Gehäuse gelagert ist, und daß etwa im Rotorzentrum ein axial verlaufendes, am oberen Ende mit mindestens einer Öffnung ausgestattetes, z.B. gegenüber dem Rotor feststehendes Gas-, insbesondere Luftentnahmerohr angeordnet ist, an dessen axial verlaufendem Innenraum unten bzw. am von der Mischungszufuhr abgewandten Ende mit der Rotordrehachse etwa zusammenfallend sich ein, z.B. gegenüber der rotierenden Welle des Rotors abgedichteter und beispielsweise feststehender, Gas-, insbesondere Luftentnahmekanal anschließt, der vorteilhaft mit einer Vakuumpumpe verbunden bzw. verbindbar ist, wobei vorteilhaft die Rotorlänge bzw. -höhe wesentlich größer ist als der Rotoraußendurchmesser, so daß beim Anschluß der Vorrichtung an einen die Material-Gas-Mischung, insbesondere die Faserstoffsuspension, enthaltenden, zu entleerenden Behälter dieser Rotor zum Teil in diesen Behälter reicht und wobei im Betrieb, je nach Einbau, die Rotorachse von lotrecht bis waagrecht angeordnet sein kann sowie die Material-Gas-Mischungszufuhr in das Gehäuse bzw. zum Rotor oben bis seitlich und die Materialableitung am Gehäuseumfang vorgesehen sind.

Gemäß der Erfindung ist zwecks optimaler Förderung der Pumpe in ihrem gesamten Arbeits- und Regelbereich sowie zwecks einer Gas- bzw. Luftabtrennung bei weitestgehend minimalem Leistungs- bzw. Stromverbrauch eine, insbesondere durch ein Computerprogramm vorprogrammierbare, Steuerungsautomatik, beispielsweise ein Elektronikschrank, vorgesehen, die bzw. der mit einem Konsistenzmesser der vorgegebenen Mischung sowie mit Einstellern für deren Fördermenge und deren Förderhöhe einerseits und mit Drehzahlreglern des Antriebsmotors für die Bewegung des Rotors, des Pumpenmotors und des Motors der Vakuumpumpe anderseits in Verbindung steht, so daß diese Motoren in Abhängigkeit von der Mischungskonsistenz sowie der vorgegebenen Fördermenge und Förderhöhe abstimmbar sind.

Das erfindungsgemäße Verfahren zur Behandlung von zu pumpenden, insbesondere mittel- und hochkonsistenten, Material-Gas-Mischungen, vorzugsweise gas-, insbesondere lufthältigen Faserstoffsuspensionen, wobei eine Abtrennung des Gases vor dem Pumpvorgang vorgenommen wird, zum Betreiben bzw. unter Verwendung der vorerwähnten Vorrichtungen und Anlagen, ist vornehmlich dadurch gekennzeichnet, daß die Material-Gas-Mischung, vorzugsweise die gashältige Faserstoffsuspension, in einem vom Pumpengehäuse getrennten Sonderbehälter zur dem Pumpvorgang vorgeschalteten getrennten Gas-, insbesondere Luftabtrennung einer, vorteilhaft hochtourigen, Rotation, insbesondere zwischen 1200 und 3400 UpM, vorzugsweise von etwa 3000 UpM, unterworfen wird, während zumindest im Betrieb etwa der Achse der Rotationsbewegung der Material-Gas-Mischung Gas, insbesondere Luft, insbesondere am Behälterboden, abgesaugt bzw. ein Vakuum angelegt wird. Ein Fliehkraftregler bzw. ein Ventil öffnet zu diesem Zweck die Verbindung zur Vakuumpumpe. Vorteilhaft wird die Material-Gas-Mischung in einem bezüglich der Bewegungsrichtung der Mischung hinter einem Speicherbehälter befindlichen Sonderbehälter der Rotation unterworfen.

Das erfindungsgemäße Verfahren kann dadurch weiter ausgestaltet werden, daß die Material-Gas-Mischung dem Sonderbehälter z.B. von oben oder von der Seite zugeführt wird, die Gasabfuhr in der Achse, z.B. an der Unterseite bzw. an der Seite des Vakuumpumpenanschlusses bzw. an der von der Mischungszufuhr abgewandten Seite des Sonderbehälters, des Rotors durchgeführt wird und die Ableitung des weitestgehend entgasten Gemisches zur von diesem Behälter getrennt angeordneten Pumpe am Außenmantel dieses Behälters erfolgt. Dabei wird dem natürlichen Materialfluß besonders Rechnung getragen, wenn die Material-Gas-Mischung aus einem, insbesondere lotrechten, Speicherbehälter, insbesondere Fallturm, oder aus einem integrierten Rohrsystem, unmittelbar der rotierenden Mischung zugeführt wird. Ein besonders ökonomischer Betrieb läßt sich erzielen, wenn die Drehzahlen der Rotationsbewegung der Mischung bzw. des zugehörigen Antriebsmotors und der Pumpe sowie die einer das Vakuum erzeugenden Pumpe in Abhängigkeit von der Konsistenz der zugeführten Mischung, deren vorgegebener Fördermenge und Förderhöhe so aufeinander, insbesondere vermittels einer durch ein Computerprogramm vorprogrammierten Steuerungsautomatik, abgestimmt werden, daß die Pumpe in ihrem ganzen Arbeits- und Regelbereich optimal fördert, während die Gas-, insbesondere Luftabtrennung mittels eines weitestgehend minimalen Leistungs- bzw. Stromverbrauchs erfolgt. Außerdem ist es günstig, wenn zwecks Inbetriebsetzung des Entgasungs- und Pumpvorgangs zunächst die Entgasungsvorrichtung und die Stopfbüchse der Vakuumpumpe mit Wasser gespült wird.

Mit den vorgeschilderten Maßnahmen bzw. Verfahrensschritten läßt sich die Gasabscheidung vor dem Pumpvorgang besonders günstig abwickeln. Zur Inbetriebsetzung wird vorteilhaft in der Weise verfahren, daß zunächst das Spülventil geöffnet wird, dann der Pumpenmotor insbesondere mit etwa 2500 UpM bei gesperrtem Regelkreis angefahren, hierauf der Motor für die Entgasungsvorrichtung in Betrieb gesetzt wird, das Ventil für die Kühlwasserzufuhr geöffnet, die Vakuumpumpe eingeschaltet und das Vakuumbewässerungsventil geöffnet werden, wobei das Vakuum-Stellventil bei gesperrtem Regelkreis geschlossen bleibt und daß schließlich nach erfolgter Spülung die Vakuumregelung freigegeben wird.

Der Betrieb läßt sich dann zweckmäßig in der Weise abwickeln, daß das Spülventil geschlossen wird, worauf zur Einschaltung der Vakuumregelung bzw. der Vakuumpumpe das Vakuumstellventil betätigt wird und schließlich bei Erreichung einer vorgegebenen Höhe der Material-Gas-Mischung, insbesondere der Faserstoffsuspension, im, insbesondere lotrechten, Speicherbehälter, insbesondere Fallturm, die zweckmäßig auf die Steuerungsautomatik wirkende Niveauregelung freigegeben wird.

Gemäß der Erfindung werden außerdem zweckmäßig zur Abschaltung des Entgasungs- und Pumpvorganges zunächst die Vakuumpumpe ausgeschaltet, das Vakuumbewässerungsventil und das Vakuumstellventil geschlossen, hierauf das Spülventil geöffnet und der Pumpenmotor ausgeschaltet sowie schließlich das Spülventil geschlossen, der Entgasungsmotor ausgeschaltet und das Kühlventil geschlossen.

Der Betrieb läßt sich günstig abwickeln, wenn die Evakuierung bzw. das Absaugen des Gases, insbesondere der Luft, aus der Achse der Rotationsbewegung der Material-Gas-Mischung aus dem Gas-, insbesondere Luftentnahmerohr, in Abhängigkeit von der Leistungsaufnahme des die Rotation der Material-Gas-Mischung im den Rotor enthaltenden Gehäuse erzeugenden Motors geregelt wird und der Sollwert für die Leistungsaufnahme des die Rotation der Material-Gas-Mischung erzeugenden Rotors um 10-75 %, insbesondere 20-40 %, vorteilhaft etwa 30 %, niedriger als derjenige im Betrieb mit gas- bzw. luftfreier Suspension bzw. Wasser eingeregelt wird.

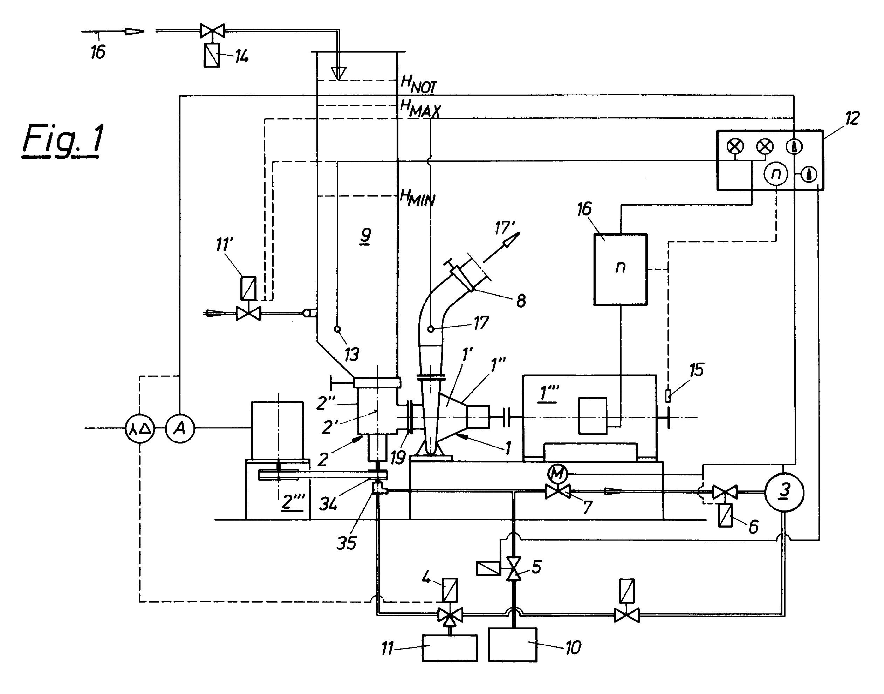

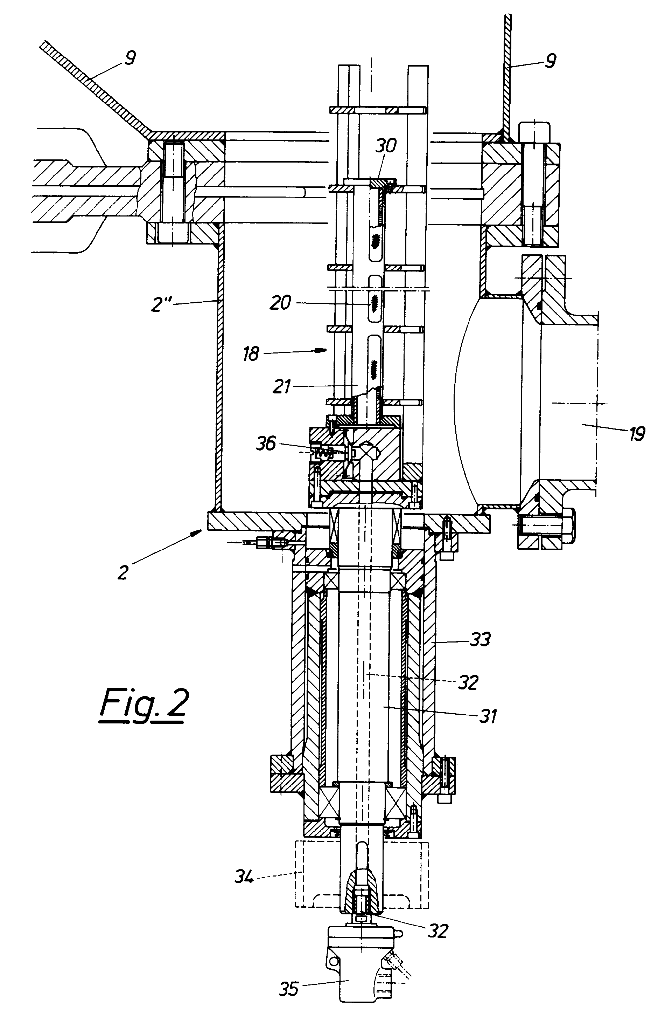

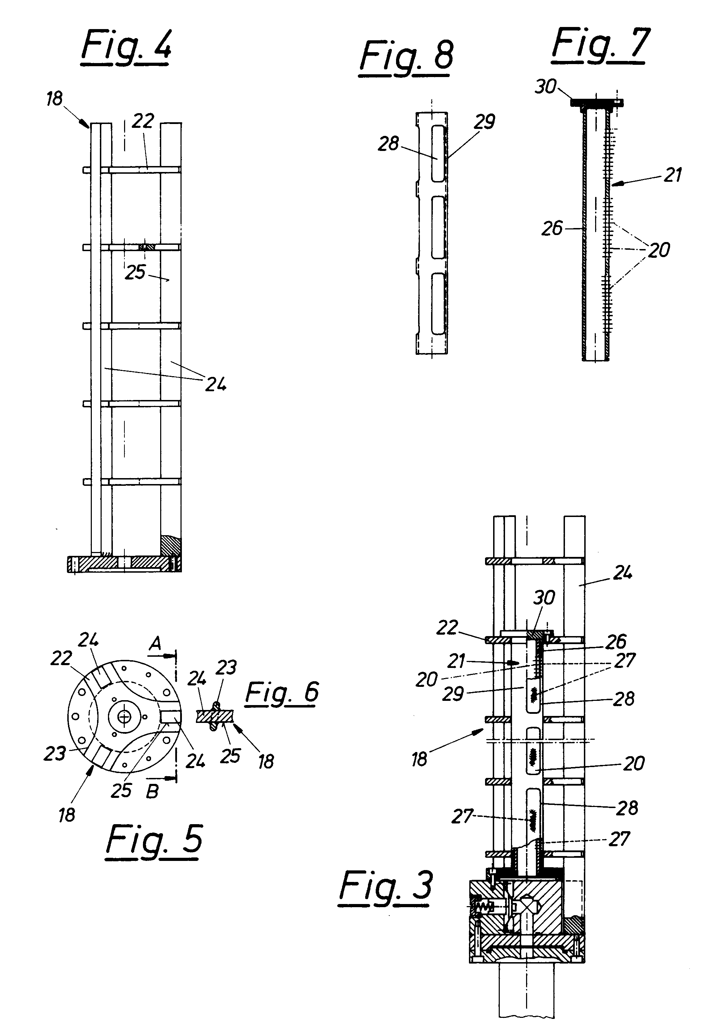

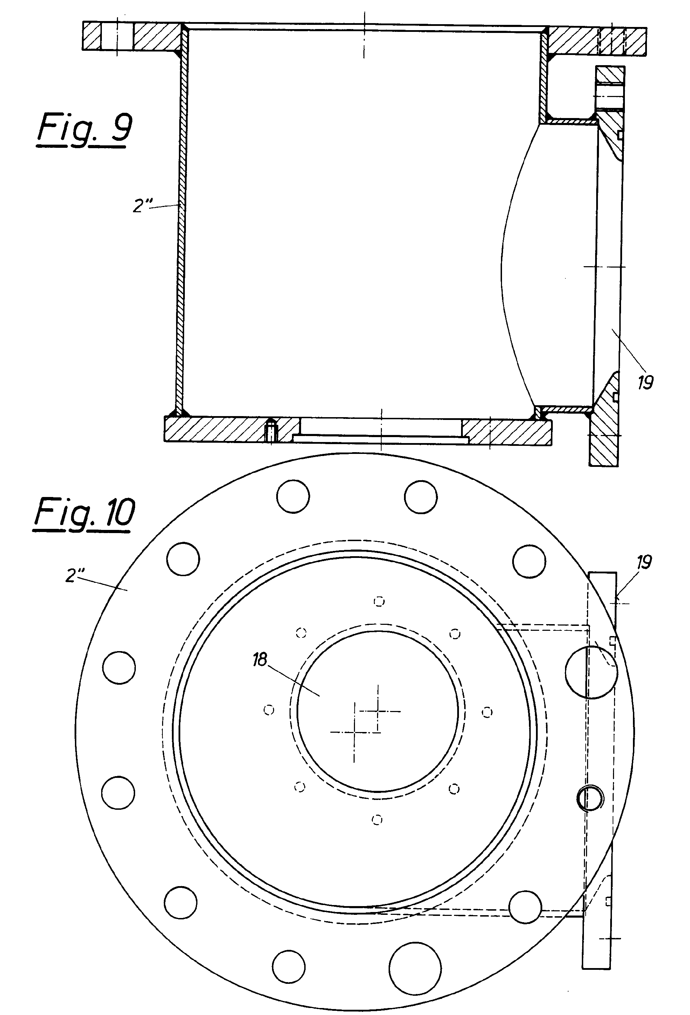

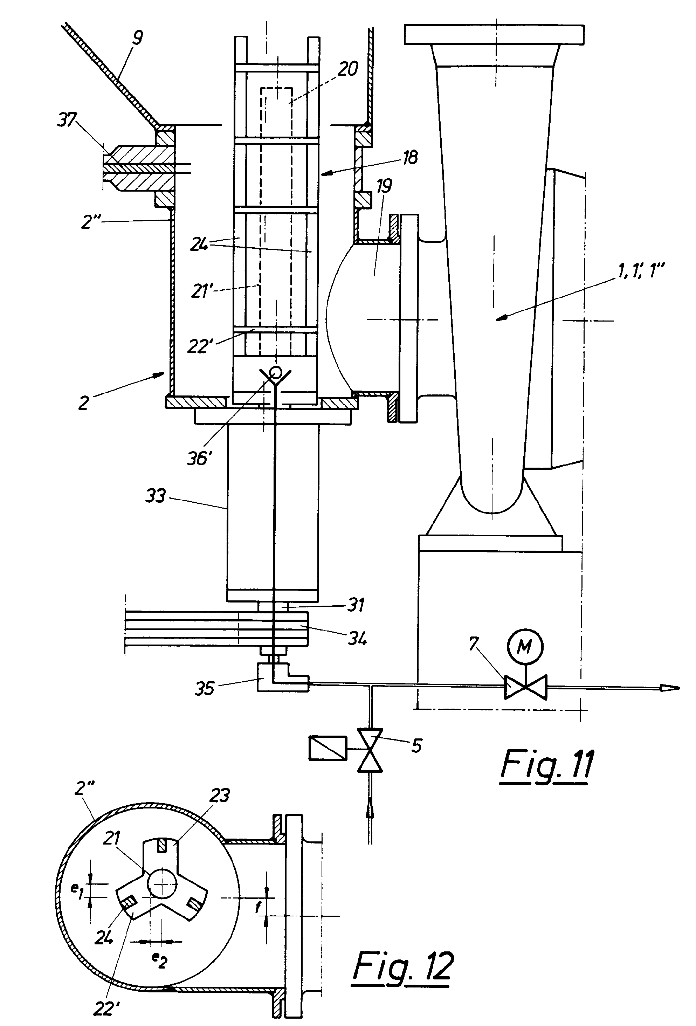

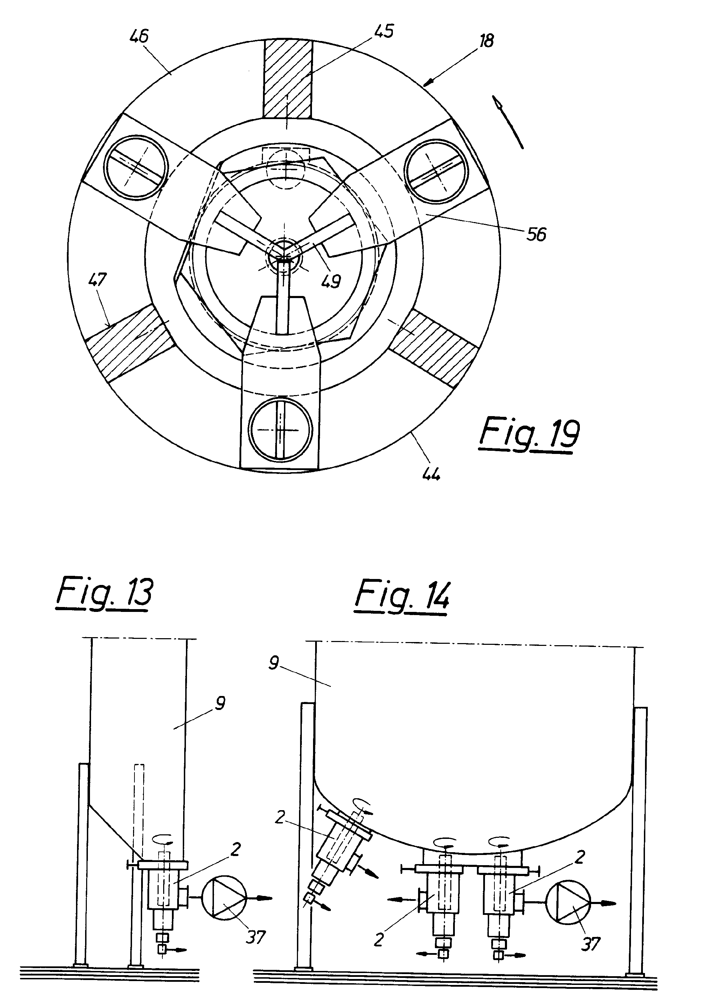

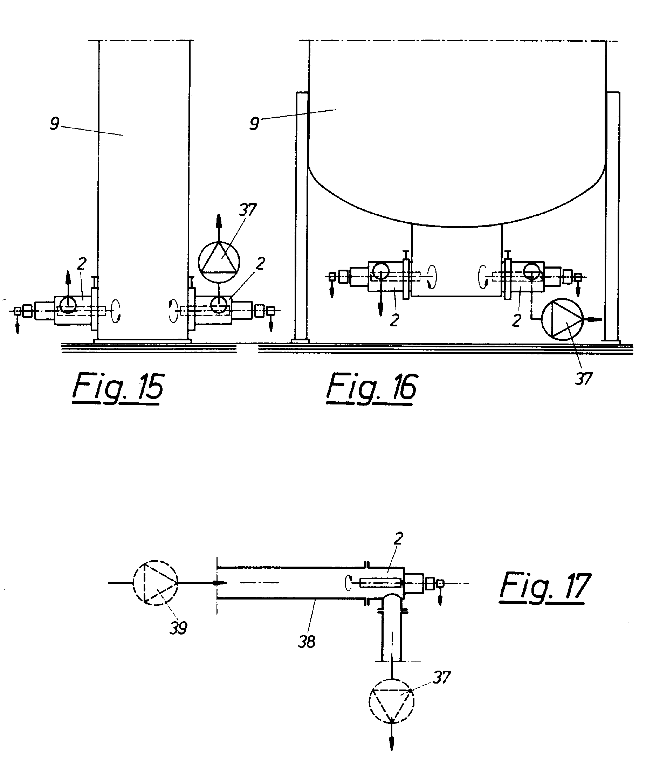

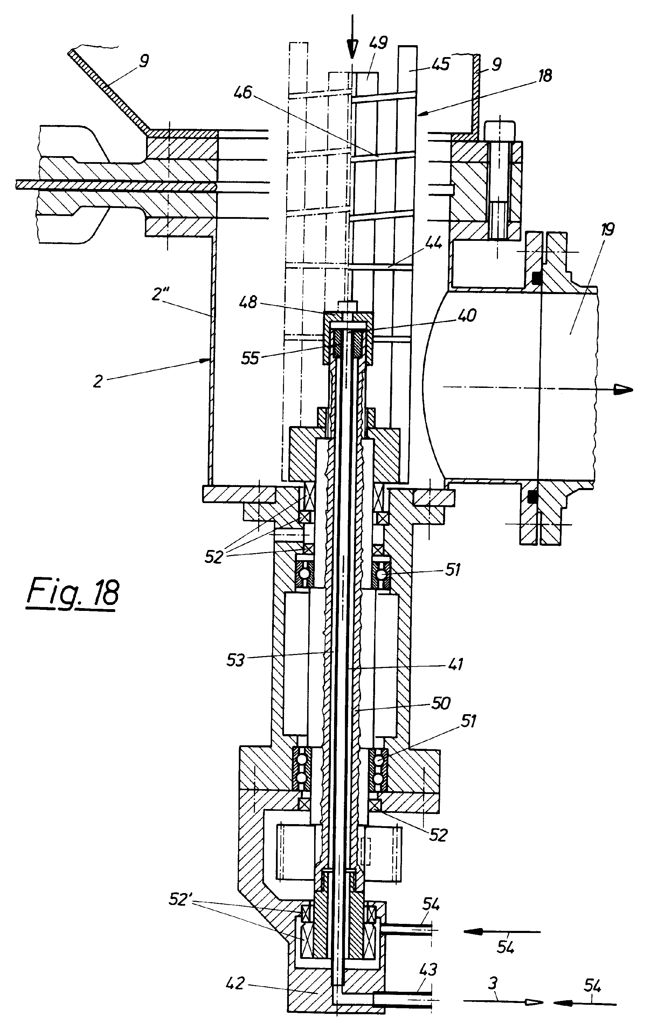

An Hand der Zeichnung wird die Erfindung beispielsweise erläutert. Dabei zeigen: Fig. 1 eine schematische Darstellung des gesamten Systems, Fig. 2 eine Entgasungsvorrichtung mit dem Unterteil des Speicherbehälters im lotrechten Querschnitt bzw. Axialschnitt, Fig. 3 den zugehörigen Rotor teilweise in Seitenansicht, teilweise im Axialschnitt, Fig. 4 den Rotor ohne Entgasungsrohr in Seitenansicht, Fig. 5 in Draufsicht, Fig. 6 einen Schnitt A-B durch den Arm eines Rotorsterns bzw. eines Leistenteils, Fig. 7 das Stützrohr sowie Fig. 8 das Halterohr des Gasentnahmerohrs. Außerdem geben die Fig. 9 und 10 einen Längsschnitt bzw. eine Draufsicht des Gehäuses bzw. in letzterem Fall auch des Rotors der Entgasungsvorrichtung wieder. Fig. 11 veranschaulicht teilweise in axialem Längsschnitt, teilweise in Seitenansicht, Fig. 12 in horizontalem Querschnitt eine Variante der Entgasungsvorrichtung. Die Fig. 13 bis 16 zeigen schematisch diverse Anschlüsse der Entgasungsvorrichtung an Speicher- bzw. Zulaufbehältern, Fig. 17 eine Einbauvariante mit einer in einer Rohrleitung eingebauten Entgasungsvorrichtung mit vor- bzw. nachgeschalteter Pumpe, Fig. 18 im Längsschnitt eine weitere Entgasungsvorrichtung und Fig. 19 einen Querschitt durch einen zugehörigen Rotor nach der Ebene C-D der Fig. 18.

Wie Fig. 1 erkennen läßt, wird - wie durch den Pfeil 16 angedeutet ist - eine lufthältige Faserstoffsuspension aus einer Vorkolonne zunächst von oben in den etwa lotrechten Speicherbehälter bzw. das Vorlagerohr bzw. den Zulaufbehälter bzw. das Standrohr bzw. den Fallturm 9 eingebracht und gelangt an dessen unterem Ende unmittelbar in die Entgasungsvorrichtung bzw. den Zustandsregler 2,2',2'' an der Oberseite dessen Gehäuses bzw. Stators 2''. Hierauf wird das weitestgehend entgaste Material mittels der getrennt angeordneten Pumpe 1,1',1''- nach Öffnen des druckseitigen Schiebers 8 - zwecks entsprechender Weiterverwendung gefördert, wie Pfeil 17' zeigt. Außerdem ist ein Spülsystem vorgesehen, wie unten im einzelnen dargelegt wird.

Im einzelnen ist hervorzuheben, daß die Pumpe 1', insbesondere eine Kreiselpumpe, mit einem vom Gehäuse 2'' der Entgasungsvorrichtung 2' getrennten Gehäuse 1'' versehen ist, wobei zweckmäßigerweise der Pumpe und der Entgasungsvorrichtung getrennte Antriebsmotoren 1''' bzw. 2''' zugeordnet sind. Am Boden des Behälters bzw. Gehäuses 2'' der Entgasungsvorrichtung, in der dem zu entgasenden Gemisch eine Rotationsbewegung mit etwa lotrechter Rotationsachse zu erteilen ist, ist eine Vakuumpumpe 3, insbesondere mit konstanter Leistung, angeschlossen.

Die Entgasungsvorrichtung 2 und die Vakuumpumpe 3 stehen über entsprechende Leitungen bzw. Ventile 5 bis 7 mit einer Spülwasserquelle 10 in Verbindung. Außerdem sind die Entgasungsvorrichtung 2 und die Vakuumpumpe 3 an eine Kühlwasserquelle 11 angeschlossen (Ventil 4!).

Für die praktische Verwendung der Anlage ist es günstig, wenn für den Betrieb der Anlage ein elektrisches Steuer- bzw. Regelgerät, vorteilhaft in Form eines Elektronikschranks 12, insbesondere ein vermittels eines Computerprogramms vorprogrammiertes automatisches Steuer- bzw. Regelgerät, vorgesehen wird, das mit dem Pumpenmotor 1''' bzw. dessen Tourenmesser 15 sowie dessen Tourenzahlregelung 16, mit dem Motor 2''' der Entgasungsvorrichtung, mit der Vakuumpumpe 3, mit dem vorteilhaft als Magnetventil ausgeführten Spülventil 5, mit dem vorteilhaft als Magentventil ausgeführten Vakuumbewässerungsventil 6, mit dem zweckmäßig elektrisch betätigten Vakuumstellventil 7, mit dem Füllhöhemesser 13 des Speicherbehälters 9, mit dem Ventil 14, für die Zufuhr der Mischung in den Speicherbehälter und dem Messer 17 der Pumpmenge verbunden ist.

Die Entgasungsvorrichtung 2 weist einen als hochtouriges Rührorgan dienenden Rotor 18 in einem Sondergehäuse 2'' auf. Dieser Rotor ist - im Betrieb - mit lotrechter Achse in diesem Gehäuse gelagert. Wie bereits erwähnt, wird die lufthaltige Suspension in das Gehäuse 2'' bzw. dem Rotor 18 oben zugeführt, das weitestgehend entlüftete Material am Umfang des Gehäuses 2'' bei 19 abgeleitet.

Es ist - wie ersichtlich - nur ein einziger, käfigartig ausgebildeter Rotor 18 im zylindrisch ausgebildeten Gehäuse 2'' vorgesehen. Im Rotorzentrum ist ein mit Öffnungen 20 ausgestattetes, sich mit dem Rotor 18 mitdrehendes Luftentnahmerohr 21 angeordnet, das an der Vakuumpumpe 3 angeschlossen ist. Im vorliegenden Fall ist die Länge bzw. Höhe des Rotors 18 wesentlich größer als der Außendurchmesser des Rotors, so daß dieser Rotor in den Speicherbehälter bzw. Fallturm 9 von unten hineinreicht.

Der Rotor 18 besteht hier aus queraxial stehenden am Umfang sternförmigen Scheiben 22 sowie aus am Umfang an den Sternarmen 23 versenkt befestigten achsparallelen Leisten bzw. Rippen 24. Hier sind dreiarmige Sterne mit daran befestigten Hochkantleisten mit etwa radial gerichteten Seitenlangflächen 25 vorgesehen, wie Fig. 5 zu entnehmen ist. Fig. 6 läßt dazu erkennen, daß, zweckmäßig im Bereich der Zufuhr der Material-Luft-Mischung bzw. in dem in den Speicherbehälter reichenden Rotorteil, sternartige Scheiben 22,23, hier durch Verformung bzw. Verdrehung der Sternarme 23, propellerartig gestaltet sind.

Wie die Fig. 2 und 20 verdeutlichen, ist der Rotor 18 im Gehäuse 2'' exzentrisch gelagert, um den Materialfluß durch die Entgasungsvorrichtung zu optimieren.

Das Luftentnahmerohr 21 besteht hier aus einem mit Öffnungen 20 versehenen Stützrohr 26, aus einem darüber gezogenen Siebrohr 27 und aus einem über dieses gezogenen im Bereich der Stützrohröffnungen 20 Großöffnungen 28 aufweisenden Halterohr 29. Das Luftentnahmerohr 21 ist zweckmäßigerweise an seinem oberen Ende mit einer Abdeckscheibe 30 verschlossen.

Der Rotor 18 ist unten mit der Antriebswelle 31 verbunden, die ebenso wie der Anschluß 32 des Luftentnahmerohrs 21,26 durch ein Führungs- bzw. Lagerrohr 33 abwärts geführt ist. Die Antriebswelle 31 ist mit einer Keilriemenscheibe 34 verbunden, auf die der Antriebsmotor 2''' wirkt. Der Anschluß 32 ist über einen Dichtkopf 35 mit der Vakuumpumpe 3 in Verbindung.

Wie bereits einleitend ausgeführt, wird mit der zuvor beschriebenen Anlage ein Pumpen von, insbesondere hochkonsistenten, Material-Luft-Mischungen, vorzugsweise lufthältigen Faserstoffsuspensionen in der Weise abgewickelt, daß eine Abtrennung der Luft vor dem Pumpvorgang vorgenommen wird. Es wird die Material-Luft-Mischung, vorzugsweise die lufthältige Faserstoffsuspension, in einem vom Pumpengehäuse getrennten Sonderbehälter 2' zur dem Pumpvorgang vorgeschalteten getrennten Luftabtrennung einer, vorteilhaft hochtourigen, Rotation, insbesondere zwischen 1200 und 3400 U/min, vorzugsweise von 3000 U/min unterworfen, während zumindest im Betrieb etwa im Zentrum der Rotationsbewegung der Material-Luft-Mischung ein Vakuum angelegt wird. Ein Fliehkraftregler 36 öffnet zu diesem Zweck bei Erreichung einer vorgegebenen Umdrehungszahl des Rotors 18 die Verbindung zur Vakuumpumpe.

Die Material-Luft-Mischung wird dem Sonderbehälter 2 von oben zugeführt, die Luftabfuhr wird an der Unterseite des Sonderbehälters durchgeführt und die Ableitung des weitestgehend entlüfteten Gemisches erfolgt zur von diesem Behälter 2 getrennt angeordneten Pumpe 1 am Außenmantel dieses Behälters bei 19. Die Material-Luft-Mischung wird aus dem lotrechten Fallturm 9 unmittelbar der rotierenden Mischung zugeführt. Die Drehzahlen der Rotationsbewegung der Mischung bzw. des zugehörigen Antriebsmotors und der Pumpe sowie die der Vakuumpumpe werden in Abhängigkeit von der Konsistenz der zugeführten Mischung, deren vorgegebener Fördermenge und Förderhöhe so aufeinander, insbesondere vermittels einer durch ein Computerprogramm vorprogrammierten Steuerungsautomatik, abgestimmt, daß die Pumpe 1,1',1'' in ihrem ganzen Arbeits- und Regelbereich optimal, insbesondere bei konstantem Leistungs- bzw. Stromverbrauch, fördert, während die Luftabtrennung mittels eines weitestgehend minimalen Leistungs- bzw. Stromverbrauchs erfolgt.

Die etwas modifizierte Variante der Entgasungsvorrichtung 2 nach den Fig. 11 und 12 läßt vor allem schematisch ein Fliehkraftventil 36' und einen Absperrschieber 37 erkennen, der nach Absenken des Rotors 18 der Entgasungsvorrichtung geschlossen werden kann. Ein solcher Absperrschieber kann dann zweckmäßig sein, wenn es sich um große Zulaufbehälter bzw. Falltürme bzw. Vorlagerohre bzw. Standrohre 9 handelt oder Fälle vorliegen, in denen eine Entleerung dieses Behälters 9 bei einer allfällig erforderlichen Reparatur der Entgasungsvorrichtung nicht möglich ist.

Statt eines Fliehkraftventils 36 bzw. 36' kann gegebenenfalls auch ein von außen ansteuerbares Magnetventil od.dgl. vorgesehen werden, wobei die entsprechenden Steuerbefehle über Schleifringe od.dgl. eingespeist werden können.

Die Form der als Versteifungsblätter dienenden sternförmigen Scheiben 22' des wieder käfigartig ausgebildeten Rotors 18 ist hier, wie Fig. 12 zeigt, etwas modifiziert. Das Filterrohr 21' kann auch an seiner gesamten Oberfläche, insbesondere am gesamten Mantel mit Duchtrittsöffnungen für das Gas, insbesondere Luft, versehen sein.

Der Dichtkopf 35 stellt den Übergang von der rotierenden Welle 31 zur stillstehenden Spül- bzw. Entgaser-Leitung dar. Das Spülventil 5 kann elektromagnetisch oder pneumatisch betätigt werden.

Die übrigen Teile der Variante nach den Fig. 11 und 12 entsprechen im wesentlichen der Ausbildung nach den Fig. 2 bis 10 (bzw. Fig. 1), wobei demgemäß die gleichen Bezugszeichen verwendet wurden.

Zwecks Inbetriebsetzung des Entgasungs-, und des Pumpvorgangs wird zunächst die Entgasungsvorrichtung 2,2',2'' und die Stopfbüchse der Vakuumpumpe 3 mit Wasser gespült, indem das Spülventil 5 geöffnet und der Pumpenmotor 1''' angefahren wird. Hiebei werden zunächst das Spülventil 5 geöffnet, dann etwa 5 Sekunden gewartet und der Pumpenmotor 1''' insbesondere mit etwa 1500-2500 U/min, bei geöffnetem druckseitigen Schieber 8 und gesperrtem Regelkreis angefahren, etwa 15 Sekunden gewartet, hierauf der Motor 2''' für die Entgasungsvorrichtung in Betrieb gesetzt, das vorteilhaft als Magnetventil ausgeführte Ventil 4 für die Kühlwasserzufuhr geöffnet, die Vakuumpumpe 3 eingeschaltet und das Vakuumbewässerungsventil 6 geöffnet, wobei das Vakuum-Stellventil 7 bei gesperrtem Regelkreis geschlossen bleibt. Man wartet etwa 10 Sekunden. Nach erfolgter Spülung wird die Vakuumregelung freigegeben. Das Spülventil 5 wird geschlossen, man wartet etwa 10 Sekunden, worauf zur Einschaltung der Vakuumregelung bzw. der Vakuumpumpe 3 das Vakuumstellventil 7 betätigt wird, man wartet wieder etwa 10 Sekunden und schließlich wird bei Erreichung einer vorgegebenen Höhe der Material-Luft-Mischung, insbesondere der Faserstoffsuspension, im Speicherbehälter 9 die zweckmäßig auf die Steuerungsautomatik wirkende Niveauregelung freigegeben.

Zur bei Erreichen eines Abschaltkriteriums oder durch einen Abschaltbefehl gestarteten Abschaltung des Entgasungs- und Pumpvorgangs werden zunächst die Vakuumpumpe 3 ausgeschaltet, das Vakuumbewässerungsventil 6 und das Vakuumstellventil 7 geschlossen, dann etwa 10 Sekunden gewartet, hierauf das Spülventil 5 geöffnet und der Pumpenmotor 1''' ausgeschaltet, wieder etwa 10 Sekunden gewartet sowie schließlich das Spülventil 5 geschlossen, der Entgasungsmotor 2''' ausgeschaltet und das Kühlventil 4 geschlossen.

Wie oben bereits erwähnt, enthält der Fallturm 9 in der Regel einen Füllhöhenmesser bzw. eine Niveausonde 13, wobei in Abhängigkeit vom Stoffniveau im Fallturm die Pumpendrehzahl bzw. eine Drosselung des Stoffflusses geregelt werden kann.

Beim Betrieb der Anlage erfolgen demgemäß zweckmäßigerweise Alarmmeldungen und gegebenenfalls entsprechende Schaltvorgänge od.dgl bei einer Unterschreitung einer minimalen Höhe H_{MIN} (siehe Fig. 1!) des Stoffes im Fallturm bzw. Vorlagerohr bzw. Standrohr bzw. Zulaufbehälter 9, bei Überschreitung einer maximalen Höhe H_{MAX} (siehe Fig. 1!) im Fallturm bzw. Vorlagerohr bzw. Standrohr 9 sowie dann, wenn die Drehzahl der Pumpe länger als 60 Sekunden auf 3000 U/min verbleibt (n_{max (t)}).

Nach Erreichen eines Abschaltkriteriums wird sofort der Abschaltvorgang eingeleitet. Solche Abschaltkriterien stellen dar: Die Überschreitung einer maximalen Höhe H_{NOT} (siehe Fig. 1!) des Stoffes im Fallturm bzw. Vorlagerohr bzw. Standrohr 9, ein Stillstand der Entgasungsvorrichtung 2 bzw. ein Absinken deren Drehzahl bzw. ihres Antriebsmotors 2''' auf Null sowie ein Überschreiten eines vorgegebenen Maximalwertes des Stromes dieses Antriebsmotors 2'''.

Beispielsweise ist gedacht, daß die Entgasungsvorrichtung nur einen geringen Druck (in Richtung Stoffpumpensaugstutzen), z.B. von etwa 0,2 bar in Wasser gemessen, erzeugt, also keine eigentliche bzw. besondere bzw. selbständige Pumpwirkung ergibt. Z.B. liegt die Antriebsleistung der Entgasungsvorrichtung etwa bei 20-30 % der Leistung der Stoffpumpe 1. Naturgemäß hängt die Funktionsgüte der Entgasungsvorrichtung von der Dichtheit des Aggregates bzw. der Anlage, insbesondere von der Wirksamkeit bzw. Qualität der Gleitringdichtung in der Stoffpumpe und in der Entgasungsvorrichtung, der Dichtheit von Schiebern und Flanschverbindungen, ab. Vorteilhaft ist auch die Möglichkeit eines Rotorausbaus ohne Entleerung des Fallturms bzw. Vorlagerohrs bzw. Standrohrs 9.

Was den Betrieb der Anlage bzw. die Funktion der vorbeschriebenen Vorrichtung und Anlagenelemente betrifft, ist folgendes hevorzuheben:

Die Koordination der Schaltvorgänge sowie die Steuerung und Regelung der Pumpe und der Entgasungsvorrichtung erfolgt entweder mit einer frei programmierbaren Steuerung oder über ein Prozeßleitsystem.

Aufgabe der Entgasungsvorrichtung ist vor allem die folgende:

Bei einer Konsistenz der zu pumpenden Suspension bis zu etwa 10 %atro (abhängig von der Suspensionsart) hat die Entgasungsvorrichtung vornehmlich die Funktion einer Zubringervorrichtung zur Pumpe, bei Konsistenzen von 10-15 % atro, wobei die Suspension naturgemäß größere Luftmengen beinhaltet, hat sie neben der Zubringerfunktion die Aufgabe der Entgasung wahrzunehmen. Ohne eine Entgasung der Suspension wäre ein Pumpen in diesem Konsistenzbereich praktisch nicht mehr möglich, da die sich im Zentrum des Pumpenlaufrades auf Grund der Zentrifugalwirkung ausscheidende Luft den Saugstutzen der Pumpe nach kurzer Zeit ausfüllen würde, so daß es zum Abreißen des Saugstromes kommt.

Das erfindungsgemäß abgesaugte Gas, insbesondere Luft, erfüllt dabei einen willkommenen Nebeneffekt, welcher zu Einsparung von eventuell beizumengenden Chemikalien führt. Weiters werden Pulsationen in der Druckleitung der Pumpe vermieden, welche durch das komprimierte, eingeschlossene Gas entstehen können.

Zusammenfassend ist zur Funktion und zur Regelung der Entgasungsvorrichtung hervorzuheben:

Durch die relativ hohen Drehzahl (n∼3000 l/min) und geeignete Form des Entgaser-Rotors 18 kommt es zur Separation des Gases, insbesondere Luft, im Zentrum des Rotors 18 (Zentrifuge). Dieses ausgeschiedene Gas gilt es mittels Vakuumpumpe abzusaugen.

Das Hauptproblem beim Absaugen besteht dabei in der Erkennung der abgeschiedenen Gasmenge und in der Folge der richtigen Dosierung des für die Absaugung erforderlichen Vakuums.

Bei zu starker, konstanter Absaugung besteht die Gefahr, daß sich die Saugleitung und Armaturen bis hin zur Vakuumpumpe 3 in kurzer Zeit mit angesaugter Suspension verlegen.

Um dies beim Anfahren, Betrieb und Abstellen des Entgasers 2 zu verhindern, werden zweckmäßigerweise verschiedene Schaltvorgänge und Regelungen programmiert.

Eine sichere bzw. gute Aussage über die Menge des ausgeschiedenen Gases bietet die gemessene, aufgenommene Leistung des Rotor-Antrieb-Motors 2'''. Viel Gas läßt die aufgenommene Leistung sinken, wenig Gas bedeutet hingegen hohe Leistung, hervorgerufen durch volles Eintauchen des Rotors 18, insbesondere der Rotor-Rippen 24 und Versteifungsblätter 22 in die Suspension (p-Unterschied Suspension zu Gas∼ 1000:1).

Ausgangspunkt für den einzustellenden Sollwert der Antriebsleistung des Rotorantriebs 2''' ist die aufgenommene Leistung beim Betrieb mit luftfreier Suspension oder Wasser.
Dieser Sollwert, welcher wieder abhängig von der Konsistenz und Suspensionsart um 10-75 %, insbesondere20-40 %, vorteilhaft etwa 30 %, niedriger als der mit Wasser gemessene Wert bzw. die mit Wasser gemessene Antriebsleistung anzusetzen ist, wird über einen Regler, welcher auf das Vakuum-Regelventil 7 wirkt, konstant gehalten.
Dadurch ist immer ein gewisser Sicherheitsabstand der Suspension zum Filterrohr 21 gewährleistet. Da das gaserfüllte Zentrum durch starke Turbulenzen nicht frei von Stoffteilen sein kann, wurde zur Absicherung gegen das Eindringen von Feststoffteilchen ein Filterrohr 21 bzw. 21' der Absaugleitung vorgeschaltet.

Im Stillstand schützt das Filterrohr 21 bzw. 21' und das Fliehkraftventil 36 bzw. 36', welches erst bei einer Drehzahl von etwa 2000 l/min öffnet, die Absaugleitung gegen Eindringen der Suspension.

Um sicher zu gehen, daß es beim Anfahren und Abstellen der Pumpe 1 und des Entgasers 2 zu keinem Einsaugen der Suspension in das Filterrohr 21 bzw. 21' kommt, wird vorteilhaft in der Ein- und Abschaltphase ein programmierter Spülvorgang über das Spülventil 5 vorgesehen. Der zeitliche Ablauf dieser Schaltungen sowie die Regelkreise, die Alarmmeldungen, die Anfahr- und Abschaltkriterien sind wie oben dargelegt bevorzugt anzuwenden. Die Einschaltsequenz ist in jedem Fall entsprechend den Einsatzbedingungen der Pumpen festzulegen.

Die Fig. 13 bis 16 lassen verschiedene Möglichkeiten des Einbaues bzw. des Anschlusses der Entgasungsvorrichtung 2 in den bzw. am Speicherbehälter 9 erkennen. Je nach Bedarf sind solche Einbauten bzw. Anschlüsse in der Weise möglich, daß die Achse des Rotors 18 der Entgasungsvorrichtung 2 lotrechte (Fig. 13,14), waagrechte (Fig. 15,16) sowie beliebige Schräg-Lagen (Fig. 14) einnehmen kann. Demgemäß erfolgt die Zufuhr der Material-Gas-Mischung in das Gehäuse 2'' bzw. zum Rotor 18 der Entgasungsvorrichtung 2 von oben bzw. von der Seite. Die Materialableitung bzw. -abfuhr 19 ist jedoch stets am Umfang des Gehäuses der Vorrichtung 2, u.zw. z.B. jeweils über ein Ventil 37, vorgesehen. Auch kann es insbesondere um die getrennte Vorbereitung einer Material-Gas-Mischung, insbesondere einer Faserstoffsuspension in der Entgasungsvorrichtung 2 vor ihrer Einbringung in eine Pumpe gehen.

Die Entgasungsvorrichtung 2 kann auch unmittelbar an ein eintegriertes Rohrsystem angeschlossen werden. Wie Fig. 17 zu entnehmen ist, kann diese Vorrichtung 2 in beliebiger Lage an das Ende eines Rohrsystems 38 angeschlossen werden, dem die Mischung mittels Pumpe 39 zugeführt bzw. mittels Pumpe 37 abgeführt wird. Die Entgasungsvorrichtung 2 kann ebenso oder ähnlich ausgeführt sein, wie oben geschildert. Es sind jedoch auch Modifikationen möglich, z.B. wie im folgenden an Hand der Fig. 18 und 19 dargelegt wird.

An Hand der Fig. 18 und 19 wird eine weitere Variante der Erfindung beschrieben.

Dabei weist die Entgasungsvorrichtung 2 wieder ein Gehäuse 2'' sowie einen darin gelagerten Rotor 18 auf. Es ist, insbesondere wieder zwecks getrennter Vorbereitung einer Faserstoffsuspension vor ihrer Einbringung in eine Pumpe 1, ein einziger käfigartig ausgebildeter, vornehmlich als hochtouriges Rührorgan dienender, Rotor 18 in einem, zweckmäßig etwa zylindrisch ausgebildeten, Gehäuse 2'' gelagert und im Rotorzentrum ein axial verlaufendes, am oberen Ende mit einer Öffnung 40 ausgestattetes, gegenüber dem Rotor 18 feststehendes Gas-, insbesondere Luftentnahmerohr 41 angeordnet, an dessen unterem bzw. von der Mischungszufuhr abgewandten Ende 42 sich ein gegenüber der rotierenden Welle des Rotors 18 abgedichteter, feststehender Gas-, insbesondere Luftentnahmekanal 43 anschließt, der vorteilhaft mit einer Vakuumpumpe 3 verbunden bzw. verbindbar ist, wobei vorteilhaft die Rotorlänge bzw. -höhe wesentlich größer ist als der Rotoraußendurchmesser, so daß beim Anschluß der Vorrichtung 2 an einen die Material-Gas-Mischung, insbesondere die Faserstoffsuspension, enthaltenden, zu entleerenden Behälter 9 dieser Rotor 18 zum Teil in diesen Behälter reicht. Mit Vorteil weist der Rotor 18 etwa queraxial zu seiner Drehachse stehende kreisringförmige Scheiben 44 bzw. vorteilhaft wenigstens zum Teil spiralförmig angeordnete, an vorzugsweise achsparallelen Leisten 45 befestigte Kreisringsektoren 46 auf. Eine bevorzugte Ausbildung ist durch Kreisringsektoren 46 mit daran befestigten Hochkantleisten 45 mit etwa radial gerichteten Seiten-Langflächen 47 gekennzeichnet. Der Entgasungseffekt kann verstärkt werden, wenn - wie hier dargestellt - im Zentrum des Rotors 18, etwa beginnend vom inneren Gas-, insbesondere Luft-Entnahmerohrende 48 an ein sich achsparallel erstreckender, vorteilhaft dreiarmiger, einen Bestandteil des Rotors bildender, also im Betrieb mit dem Rotor-Käfig mitrotierender Flügelstern 49 befindet, der im Durchmesser wesentlich kleiner ist als der Rotoraußendurchmesser. Die Laschen 56 sind am Stern 49 angeschweißt und mit dem obersten Segment 46 verschraubt. Diese Laschen dienen somit der Befestigung des Flügelsterns 49. Es kann auch eine Variante für die praktische Verwendung der Erfindung günstig sein, bei der der Rotor 18 im, insbesondere zylindrischen, Gehäuse 2'' exzentrisch gelagert ist. Für die Entgasung kann es besonders vorteilhaft sein, wenn der Zwischenraum zwischen Rotor und Gehäuse groß gehalten wird, so daß sich bei der Rotation des Rotors 18 und gegebenenfalls des Flügelsterns 49 ein zum Mischungseintritt, hier nach oben offenes Grenz-Paraboloid der Mischung (Grenze Mischung - Luft!) sowie eine gute zentrale Gassäule ausbilden können. Zu diesem Zweck ist der Innendurchmesser des Rotorgehäuses 2'' wesentlich größer als der Außendurchmesser des Rotors 18, beispielsweise verhält er sich wie 3 zu 1 bis 1,5 zu 1, vorteilhaft wie etwa 2,5 zu 1 zum Rotoraußendurchmesser.

Eine besonders zweckmäßige Ausführung ergibt sich, wenn zwischen dem Außenmantel des Gasentnahmerohrs 41 und der im Bereich dieses Rohres 41 hohl ausgebildeten Welle 50 des Rotors 18 sowie deren Lager 51 bzw. Dichtungen 52,52' ein insbesondere zylindrischer Raum 53 vorgesehen ist, der unmittelbar bzw. mittelbar mit einer Kühlwasserversorgung 54 bzw. der Vakuumpumpe 3 in Verbindung steht, so daß das für die Kühlung der Dichtung 52', die zur Abdichtung des gegenüber der Rotorwelle feststehenden Gas-, insbesondere Luftentnahmerohrs 41 dient, benötigte Kühlwasser 54, das vorteilhaft auch der Kühlung und der Schmierung des mit der Welle mitrotierenden, das Gas-, insbesondere Luft-Entnahmerohr 41 führenden Gleitlagers 55 und in weiterer Folge als Spülwasser für das Luftentnahmerohr 41 dient, während des Betriebes zuführbar und schließlich von der Vakuumpumpe 3 absaugbar ist.

Ein günstiges Betriebsverfahren kommt dann insbesondere zustande, wenn die Evakuierung bzw. das Absaugen des Gases, insbesondere der Luft, aus dem Gas-, insbesondere Luftentnahmerohr 41, insbesondere aus dem Zentrum der Rotationsbewegung der Material-Gas-Mischung in Abhängigkeit von der Leistungsaufnahme des die Rotation der Material-Gas-Mischung im den Rotor 18 enthaltenden Gehäuse 2'' erzeugenden Motors 2''' geregelt wird (siehe auch Fig. 1!). Dabei kann der Sollwert für die Leistungsaufnahme um 10 - 75%, insbesondere 20 - 40 %, vorteilhaft etwa 30 %, niedriger als derjenige im Betrieb mit gas- bzw. luftfreier Suspension bzw. Wasser eingeregelt werden.

Zusammenfassend ist zur letztbeschriebenen Vorrichtung hervorzuheben, daß im Rotorzentrum ein axial verlaufendes, am oberen Ende mit einer Öffnung 40 ausgestattetes, gegenüber dem Rotor 18 feststehendes Gas-, insbesondere Luft-Entnahmerohr 41 angeordnet ist, an dessen unterem Ende 42 sich, ein gegenüber der rotierenden Welle abgedichteter, feststehender Gas-, insbesondere Luftentnahmekanal 43 anschließt, der vorteilhaft mit einer Vakuumpumpe 3 (Fig. 1!) verbunden bzw. verbindbar ist. Das für die Kühlung der Dichtung des zur Abdichtung des gegenüber der Rotorwelle feststehenden Gas-, insbesondere Luft-Entnahmerohres benötigte Wasser wird vorteilhaft auch zur Kühlung und Schmierung des mit der Welle mitrotierenden, das Gas-, insbesondere Luft-Entnahmerohr führenden Gleitlagers und in weiterer Folge als Spülwasser für das Gas-, insbesondere Luft-Entnahmerohr während des Betriebes herangezogen, um schließlich von der Vakuumpumpe abgesaugt zu werden.

## Patentansprüche

1. Vorrichtung zur kontinuierlichen Abscheidung von Gas, insbesondere Luft, aus zu pumpenden, insbesondere mittel- oder hochkonsistenten, Material-Gas-Mischungen, insbesondere Faserstoffsuspensionen, die ein Gehäuse (2'') sowie einen darin gelagerten schnellrotierenden Rotor (18) mit einer Drehzahl von mindestens 1200 V/Min aufweist, wobei die Material-Gas-Mischungszufuhr in das Gehäuse (2'') etwa parallel zur Rotorachse vertikal von oben bis horizontal seitlich und die Materialableitung am Gehäuseumfang vorgesehen sind, dadurch gekennzeichnet, daß zwecks vom Pumpvorgang getrennter Vorbereitung einer Material-Gas-Mischung vor ihrer Einbringung in eine Pumpe (1) ein einziger käfigartig ausgebildeter Rotor (18) vorgesehen ist und daß im Rotorzentrum ein axial verlaufendes, mit mindestens einer Öffnung (20,29 bzw. 40) ausgestattetes Gasentnahmerohr (21,21',26 bzw. 41) angeordnet ist, an dessen von der Mischungszufuhr abgewandten Ende (42) sich ein Gasentnahmekanal (32 bzw. 43) anschließt.

2. Vorrichtung nach Anspruch 1, dadurch gekennzeichnet, daß die Rotorlange bzw. -höhe wesentlich größer ist als der Rotoraußendurchmesser, so daß beim Anschluß der Vorrichtung (2) an einen die Material-Gas-Mischung enthaltenden, zu entleerenden Behälter (9) dieser Rotor (18) zum Teil in diesen Behälter reicht.

3. Vorrichtung nach Anspruch 1 oder 2, dadurch gekennzeichnet, daß das Gasentnahmerohr (41) am oberen Ende eine Öffnung aufweist und gegenüber dem Rotor (18) feststeht.

4. Vorrichtung nach Anspruch 3, dadurch gekennzeichnet, daß der Gasentnahmekanal (43) gegenüber der rotierenden Welle des Rotors (18) abgedichtet und feststehend ist.

5. Vorrichtung nach Anspruch 1 oder 2, dadurch gekennzeichnet, daß das Gasentnahmerohr (21,26) mit Öffnungen (20,29) im Mantel versehen ist und mit dem Rotor (18) mitdrehend angeordnet ist.

6. Vorrichtung nach einem der Ansprüche 1 bis 5, dadurch gekennzeichnet, daß der käfigartige Rotor (18) einen einzigen Käfig aus queraxial stehenden ringförmigen, insbesondere sternartigen, Scheiben (22,22') sowie aus am Scheibenumfang befestigten achsparallelen Leisten (24) aufweist.

7. Vorrichtung nach Anspruch 6, dadurch gekennzeichnet, daß die sternartigen Scheiben (22,23) mit daran befestigten Hochkantleisten (24) mit etwa radial gerichteten Seiten-Langflächen (25) versehen sind, deren in radialer Richtung gemessene Breite wesentlich geringer ist als die Länge des Rotoraußenradius.

8. Vorrichtung nach einem der Ansprüche 1 bis 5, dadurch gekennzeichnet, daß der Rotor (18) etwa queraxial zu seiner Drehachse stehende kreisringförmige Scheiben (44) bzw. vorteilhaft wenigstens zum Teil spiralförmig angeordnete, an vorzugsweise achsparallelen Leisten (45) befestigte Kreisringsektoren (46) aufweist (Fig. 19).

9. Vorrichtung nach Anspruch 8, dadurch gekennzeichnet, daß die Kreisringsektoren (46) mit daran befestigten Hochkantleisten (45) mit etwa radial gerichteten Seiten-Langflächen (47) (Fig. 19) versehen sind.

10. Vorrichtung nach Anspruch 8 oder 9, dadurch gekennzeichnet, daß sich im Zentrum des Rotors (18) etwa beginnend vom inneren Gasentnahmerohrende (48) an ein sich achsparallel erstreckender mit dem Rotor-Käfig mitrotierender Flügelstern (49) befindet, der im Durchmesser wesentlich kleiner ist als der Rotoraußendurchmesser (Fig. 19, Fig. 18).

11. Vorrichtung nach einem der Ansprüche 1 bis 10, dadurch gekennzeichnet, daß der Rotor (18) im Gehäuse (2'') exzentrisch gelagert ist.

12. Vorrichtung nach einem der Ansprüche 1 bis 11, dadurch gekennzeichnet, daß der Innendurchmesser des Rotorgehäuses (2'') wesentlich größer als der Außendurchmesser des Rotors (18) ist, beispielsweise er sich wie 3 zu 1 bis 1,5 zu 1, vorteilhaft wie etwa 2,5 zu 1, zum Rotoraußendurchmesser verhält.

13. Vorrichtung nach einem der Ansprüche 1 bis 12, dadurch gekennzeichnet, daß zwischen dem Außenmantel des Gasentnahmerohrs (41) und der im Bereich dieses Rohres (41) hohl ausgebildeten Welle (50) des Rotors (18) sowie deren Lager (51) bzw. Dichtungen (52,52') ein Raum (53) vorgesehen ist, der mit einer Kühlwasserversorgung (54) bzw. der Vakuumpumpe (3) in Verbindung steht, so daß das für die Kühlung der Dichtung (52'), die zur Abdichtung des gegenüber der Rotorwelle feststehenden Gasentnahmerohres (41) dient, benötigte Kühlwasser (54) während des Betriebes zuführbar und schließlich von der Vakuumpumpe (3) absaugbar ist.

14. Vorrichtung nach Anspruch 13, dadurch gekennzeichnet, daß das Kühlwasser auch für die Kühlung und Schmierung des mit der Welle mitrotierenden, das Gasentnahmerohr (41) führenden Gleitlagers (55) und in weiterer Folge als Spülwasser für das Gasentnahmerohr (41) vorgesehen ist.

15. Anlage unter Verwendung einer Vorrichtung nach einem der Ansprüche 1 bis 14, dadurch gekennzeichnet, daß eine Pumpe (1'), insbesondere eine Kreiselpumpe, mit einem vom Gehäuse (2'') der Entgasungsvorrichtung (2') getrennten Gehäuse (1'') vorgesehen ist sowie saugseitig an die Materialableitung der Entgasungsvorrichtung angeschlossen ist und daß eine Vakuumpumpe an das Gasentnahmerohr angeschlossen ist.

16. Anlage nach Anspruch 15, dadurch gekennzeichnet, daß der Pumpe (1') und der Entgasungsvorrichtung (2') getrennte Antriebsmotoren (1''' bzw. 2''') zugeordnet sind.

17. Anlage nach Anspruch 15 oder 16, dadurch gekennzeichnet, daß an die Entgasungsvorrichtung (2') mit etwa lotrechter Rotationsachse des zu entgasenden Gemisches, insbesondere an deren Unterseite bzw. an der von der Materialzufuhr abgewandten Seite des Sonderbehälters (2''), eine Vakuumpumpe (3) angeschlossen ist.

18. Anlage nach einem der Ansprüche 15 bis 17, dadurch gekennzeichnet, daß der Speicherbehälter (9) für die Material-Gas-Mischung unmittelbar am Gehäuse (2'') der Entgasungsvorrichtung (2') angeschlossen bzw. unmittelbar mit diesem Gehäuse verbunden ist.

19. Anlage nach einem der Ansprüche 15 bis 18, dadurch gekennzeichnet, daß die Entgasungsvorrichtung (2') und die Vakuumpumpe (3) über mit Ventilen (5 bis 7) versehene Leitungen miteinander und mit einer Spülwasserquelle (10) in Verbindung stehen.

20. Anlage nach einem der Ansprüche 15 bis 19, dadurch gekennzeichnet, daß die Entgasungsvorrichtung (2') und die Vakuumpumpe (3) an eine Kühlmediumquelle (11), insbesondere an eine Kühlwasserquelle, angeschlossen sind.

21. Anlage nach einem der Ansprüche 15 bis 20, dadurch gekennzeichnet, daß ein vorprogrammierbares automatisches elektrisches Steuer- bzw. Regelgerät (12) vorgesehen ist, das mit einem Strommesser (17) des Rotormotors (2''') und mit einem Vakuumregelventil (7) verbunden ist, wodurch die Evakuierung bzw. das Absaugen des Gases, insbesondere der Luft, aus dem Gas-, insbesondere Luftentnahmerohr (21), insbesondere der Achse der Rotationsbewegung der Material-Gas-Mischung, in Abhängigkeit von der Leistungsaufnahme des die Rotation der Material-Gas-Mischung im den Rotor (18) enthaltenden Gehäuse (2'') erzeugenden Motors (2''') regelbar ist.

22. Anlage nach Anspruch 21, dadurch gekennzeichnet, daß das Steuer- bzw. Regelgerät (12) auf einen einzuregelnden Sollwert für die Leistungsaufnahme des die Rotation der Material-Gas-Mischung erzeugenden Motors programmiert ist, der um 10-75 %, insbesondere 20-40 %, vorteilhaft etwa 30 %, niedriger ist als derjenige im Betrieb mit gas- bzw. luftfreier Suspension bzw. Wasser.

23. Anlage nach einem der Ansprüche 15 bis 22, dadurch gekennzeichnet, daß eine elektrische Steuer- bzw. Regeleinrichtung (12), insbesondere ein durch ein Computerprogramm vorprogrammiertes Steuer- bzw. Regelgerät, vorgesehen ist, das mit dem Pumpenmotor (1''')bzw. dessen Tourenmesser (15) sowie dessen Tourenzahlregelung (16), mit dem Motor (2''') der Entgasungsvorrichtung, mit der Vakuumpumpe (3), mit dem Spülventil (5), mit dem Vakuumbewässerungsventil (6), mit dem Vakuumstellventil (7), mit dem Füllhöhenmesser (13) des Speicherbehälters (9), mit dem Ventil (14) für die Zufuhr der Mischung in den Speicherbehälter und dem Messer (17) der Pumpmenge verbunden ist.

24. Anlage nach einem der Ansprüche 15 bis 23, dadurch gekennzeichnet, daß die Entgasungsvorrichtung (2') nebst dem Sondergehäuse (2'') aus einem darin gelagerten Rotor (18) besteht, wobei nur ein einziger käfigartig ausgebildeter Rotor (18) in einem etwa zylindrischen Gehäuse (2'') gelagert ist und etwa im Rotorzentrum ein axial verlaufendes, mit mindestens einer Öffnung (20,29 bzw. 40) ausgestattetes Gasentnahmerohr (21,21',26 bzw. 41) angeordnet ist, an dessen axial verlaufenden Innenraum unten bzw. am von der Mischungszufuhr abgewandten Ende mit der Rotordrehachse etwa zusammenfallend ein Gasentnahmekanal (32) anschließt, der mit der Vakuumpumpe (3) verbindbar ist.

25. Anlage nach Anspruch 24, dadurch gekennzeichnet, daß die Material-Gas-Mischungszufuhr in das Sondergehäuse (2'') bzw. zum Rotor (18) oben bis seitlich und die Materialableitung (19) am Gehäuseumfang (2'') vorgesehen sind.

26. Anlage nach einem der Ansprüche 15 bis 25, dadurch gekennzeichnet, daß der Rotor (18) aus queraxial stehenden ringförmigen Scheiben (22) sowie aus am Scheibenumfang befestigten achsparallelen Leisten (24) besteht.

27. Anlage nach einem der Ansprüche 15 bis 26, dadurch gekennzeichnet, daß die Scheiben als dreiarmige Sterne (22) mit daran befestigten Hochkantleisten (24) mit etwa radial gerichteten Seiten-Langflächen (25) ausgeführt sind.

28. Anlage nach Anspruch 27, dadurch gekennzeichnet, daß die sternartigen Scheiben (22,23), insbesondere durch Verdrehung der Sternarme (23), propellerartig geformt sind.

29. Anlage nach einem der Ansprüche 15 bis 28, dadurch gekennzeichnet, daß der Rotor (18) im Gehäuse (2'') exzentrisch gelagert ist.

30. Anlage nach einem der Ansprüche 15 bis 29, dadurch gekennzeichnet, daß das Gasentnahmerohr (21,21') aus einem innen befindlichen mit Öffnungen versehenen Stützrohr (26), aus einem darübergezogenen Siebrohr (27) und aus einem über dieses gezogenen im Bereich der Stützöffnungen (20) Öffnungen (28) aufweisenden Halterohr (29) besteht sowie daß das Gasentnahmerohr (21,21') am vom Anschluß an die Vakuumpumpe (3) abliegenden Ende verschlossen ist.

31. Anlage nach einem der Ansprüche 15 bis 30, dadurch gekennzeichnet, 5 daß mit dem Rotor (18), insbesondere mit seinem unteren Ende, ein Fliehkraftregler (36), ein Fliehkraftventil (36') bzw. ein Magnetventil verbunden ist, der bzw. das das Vakuum ab einer vorgegebenen Rotordrehzahl wirksam werden läßt.

32. Anlage nach einem der Ansprüche 15 bis 31, dadurch gekennzeichnet, daß zwecks optimaler Förderung der Pumpe (1,1',1'') in ihrem gesamten Arbeits- und Regelbereich sowie zwecks einer Gas- bzw. Luftabtrennung bei weitestgehend minimalem Leistungs- bzw. Stromverbrauch eine, insbesondere durch ein Computerprogramm vorprogrammierbare, Steuerungsautomatik, beispielsweise ein Elektronikschrank (22), vorgesehen ist, die bzw. der mit einem Konsistenzmesser der vorgegebenen Mischung sowie mit Einstellern für deren Fördermenge und deren Förderhöhe einerseits und mit Drehzahlreglern des Antriebsmotors (2''') für die Bewegung des Rotors (18), des Pumpenmotors (1''') und des Motors der Vakuumpumpe (3) anderseits in Verbindung steht, so daß diese Motoren in Abhängigkeit von der Mischungskonsistenz sowie der vorgegebenen Fördermenge und Förderhöhe abstimmbar sind.

33. Verfahren zur Behandlung von zu pumpenden, insbesondere mittel- und hochkonsistenten, Material-Gas-Mischungen, vorzugsweise gas-, insbesondere lufthältigen Faserstoffsuspensionen, wobei eine Abtrennung des Gases vor dem Pumpvorgang vorgenommen wird, unter Verwendung der Anlage nach einem der Ansprüche 15 bis 32, dadurch gekennzeichnet, daß die Material-Gas-Mischung in einem vom Pumpengehäuse (1) getrennten Sonderbehälter (2) zur dem Pumpvorgang vorgeschalteten getrennten Gasabtrennung einer Rotation unterworfen wird, während etwa in der Achse der Rotationsbewegung der Material-Gas-Mischung Gas abgesaugt bzw. ein Vakuum angelegt wird.

34. Verfahren nach Anspruch 33, dadurch gekennzeichnet, daß die Material-Gas-Mischung in einem bezüglich der Bewegungsrichtung der Mischung hinter einem Speicherbehälter (9) befindlichen Sonderbehälter (2) der Rotation unterworfen wird.

35. Verfahren nach Anspruch 33 oder 34, dadurch gekennzeichnet, daß 5 die Material-Gas-Mischung einer hochtourigen Rotation, insbesondere zwischen 1200 und 3400 UpM, vorzugsweise von etwa 3000 UpM, unterworfen wird.

36. Verfahren nach einem der Ansprüche 33 bis 35, dadurch gekennzeichnet, daß die Material-Gas-Mischung dem Sonderbehälter (2) von oben oder von der Seite zugeführt wird, die Gasabfuhr in der Achse des Rotors (18) durchgeführt wird und die Ableitung des weitestgehend entgasten Gemisches zur von diesem Behälter (2) getrennt angeordneten Pumpe (1) am Außenmantel des Behälters erfolgt.

37. Verfahren nach einem der Ansprüche 33 bis 36, dadurch gekennzeichnet, daß die Material-Gas-Mischung aus einem Speicherbehälter (9), insbesondere Fallturm, oder aus einem integrierten Rohrsystem unmittelbar der rotierenden Mischung zugeführt wird.

38. Verfahren nach einem der Ansprüche 33 bis 37, dadurch gekennzeichnet, daß zwecks Inbetriebsetzung des Entgasungs- und Pumpvorganges zunächst die Entgasungsvorrichtung und die Stopfbüchse der Vakuumpumpe mit Wasser gespült wird.

39. Verfahren nach einem der Ansprüche 33 bis 38, dadurch gekennzeichnet, daß die Evakuierung bzw. das Absaugen des Gases aus der Achse der Rotationsbewegung der Material-Gas-Mischung in Abhängigkeit von der Leistungsaufnahme des die Rotation der Material-Gas-Mischung im Sonderbehälter (2) erzeugenden Motors (2''')geregelt wird.

40. Verfahren nach Anspruch 39, dadurch gekennzeichnet, daß der einzuregelnde Sollwert für die Leistungsaufnahme des die Rotation der Material-Gas-Mischung erzeugenden Rotors um 10-75 %, insbesondere 20-40 %, vorteilhaft etwa 30 %, niedriger ist als derjenige im Betrieb mit gasfreier Suspension bzw. mit Wasser.

41. Verfahren nach Anspruch 38, dadurch gekennzeichnet, daß zunächst das Spülventil (5) geöffnet wird, dann der Pumpenmotor (1''')bei gesperrtem Regelkreis angefahren, hierauf der Motor (2''')für die Entgasungsvorrichtung in Betrieb gesetzt wird, das Ventil (4) für die Kühlwasserzufuhr geöffnet, die Vakuumpumpe (3) eingeschaltet und das Vakuumbewässerungsventil (6) geöffnet werden, wobei das Vakuum-Stellventil (7) bei gesperrtem Regelkreis geschlossen bleibt.

42. Verfahren nach Anspruch 38 oder 41, dadurch gekennzeichnet, daß nach erfolgter Spülung die Vakuumregelung freigegeben wird.

43. Verfahren nach Anspruch 42, dadurch gekennzeichnet, daß das Spülventil (5) geschlossen wird, worauf zur Einschaltung der Vakuumregelung bzw. der Vakuumpumpe (3) das Vakuumstellventil (7) betätigt wird und schließlich bei Erreichung einer vorgegebenen Höhe der Material-Gas-Mischung im Speicherbehälter (9) die auf die Steuerungsautomatik (12) wirkende Niveauregelung freigegeben wird.

44. Verfahren nach einem der Ansprüche 33 bis 43, dadurch gekennzeichnet, daß zwecks Abschaltung des Entgasungs- und Pumpvorganges zunächst die Vakuumpumpe (3) ausgeschaltet, das Vakuumbewässerungsventil (6) und das Vakuumstellventil (7) geschlossen, hierauf das Spülventil (5) geöffnet und der Pumpenmotor (1''')ausgeschaltet sowie schließlich das Spülventil (5) geschlossen, der Entgasungsmotor (2''') ausgeschaltet und das Kühlventil (4) geschlossen werden.

45. Verfahren nach einem der Ansprüche 33 bis 44, dadurch gekennzeichnet, daß die Drehzahlen der Rotationsbewegung der Mischung bzw. des zugehörigen Antriebsmotors und der Pumpe sowie die einer das Vakuum erzeugenden Pumpe in Abhängigkeit von der Konsistenz der zugeführten Mischung, deren vorgegebener Fördermenge und Förderhöhe so aufeinander, insbesondere vermittels einer durch ein Computerprogramm vorprogrammierten Steuerungsautomatik, abgestimmt werden, daß die Pumpe in ihrem ganzen Arbeits- und Regelbereich optimal fördert, während die Gas-, insbesondere Luftabtrennung mittels eines weitestgehend minimalen Leistungs- bzw. Stromverbrauchs erfolgt.

## Claims

1. An apparatus for the continuous separation of gas, in particular air, from material-gas-mixtures to be pumped, in particular medium or high consistency material-gas-mixtures, in particular fibrous material suspensions, comprising a housing (2'') as well as a high-speed rotor (18) rotating at at least 1200 rpm supported therein, the material-gas-mixture inlet into the housing (2'') being provided on the top to the horizontally lateral position, and the material discharge being provided on the periphery of the housing, characterised in that a single rotor (18) formed cage-like is provided for the purpose of preparing a material-gas-mixture separately from the pumping operation before it is introduced into a pump (1) and in that a gas-tapping pipe (21,21',26 and 41, respectively) extending axially and being provided with at least one orifice (20,29 and 40, respectively) is arranged at the center of the rotor, a gas-tapping channel (32 and 43, respectively) being joined to the end (42) of said pipe facing away from the mixture inlet.

2. The apparatus according to claim 1, characterised in that the length and height, respectively, of the rotor is considerably greater than the outer diameter of the rotor, so that upon connection of the device (2) to a container (9) to be emptied, containing the material-gas-mixture, this rotor (18) reaches partly into this container.

3. The apparatus according to claim 1 or claim 2, characterised in that the gas tapping pipe (41) has an orifice at its upper end and is stationary with respect to the rotor (18).

4. The apparatus according to claim 3, characterised in that the gas-tapping channel (43) is sealed with respect to the rotating shaft of the rotor (18) and stationary.

5. The apparatus according to claim 1 or claim 2, characterised in that the gas-tapping pipe (21,26) is provided with orifices (20,29) in its jacket and is arranged for co-rotation with the rotor (18).

6. The apparatus according to any of claims 1 to 5, characterised in that the cage-like rotor (18) has a single cage consisting of annular, in particular star-like disks (22,22') extending cross-axially as well as of ledges (24) extending parallel to the axis, attached to the periphery of the disks.

7. The apparatus according to claim 6, characterised in that the star-like disks (22,23) having upended ledges (24) attached thereto are provided with approximately radially directed lateral longitudinal faces (25), the width of which, measured in radial direction, is considerably smaller than the length of the outer radius of the rotor.

8. The apparatus according to any of claims 1 to 5, characterised in that the rotor (18) has annularly shaped disks (44) extending approximately cross-axially to its axis of rotation, and advantageously annulus sectors (46) at least partly helically arranged, attached to ledges (45) preferably extending parallel to the axis, respectively (Fig. 19).

9. The apparatus according to claim 8, characterised in that the annulus sectors (46) are provided with upended ledges (45) having approximately radially directed lateral longitudinal faces (47) (Fig. 19) attached thereto.

10. The apparatus according to claim 8 oder claim 9, characterised in that at the center of the rotor (18), approximately starting from the inner end (48) of the gas-tapping pipe, there is a blade star (49) extending parallel to the axis and co-rotating with the rotor cage, the diameter of which star is considerably smaller than the outer diameter of the rotor (Fig. 19, Fig. 18).

11. The apparatus according to any of claims 1 to 10, characterised in that the rotor (18) is eccentrically supported in the housing (2'').

12. The apparatus according to any of claims 1 to 11, characterised in that the inner diameter of the rotor housing (2'') is considerably greater than the outer diameter of the rotor (18), the ratio between it and the outer diameter of the rotor for example being 3:1 to 1.5:1, preferably about 2.5:1.

13. The apparatus according to any of claims 1 to 12, characterised in that between the outer jacket of the gas-tapping pipe (41) and the shaft (50) of the rotor (18), which shaft is formed hollow in the region of this pipe (41), as well as their bearings (51) and seals (52,52') there is provided a space (53) in communication with a cooling water source (54) and the vacuum pump (3), respectively, so that the cooling water (54) required for cooling the seal (52') serving to seal the gas-tapping pipe (41) stationary with respect to the rotor shaft, may be fed in during operation and finally sucked off by the vacuum pump (3).

14. The apparatus according to claim 13, characterised in that the cooling water also is provided for cooling and lubricating the slide bearing (55) co-rotating with the shaft and guiding the gas-tapping pipe (41) and subsequently as flushing water for the gas-tapping pipe (41).

15. An installation or arrangement employing an apparatus according to any of claims 1 to 14, characterised in that a pump (1'), in particular a centrifugal pump, having a housing (1'') separate from the housing (2'') of the degassing device (2') is provided and connected, on the suction side, to the material discharge of the degassing device and in that a vacuum pump is connected to the gas-tapping pipe.

16. The installation or arrangement according to claim 15, characterised in that separate driving engines (1''' and 2''', respectively) are associated with the pump (1') and the degassing device (2').

17. The installation or arrangement according to claim 15 or claim 16, characterised in that a vacuum pump (3) is connected to the degassing device (2') having an approximately vertical axis of rotation of the mixture to be degassed, in particular to its underside and to the side of the special container (2'') facing away from the material inlet, respectively.

18. The installation or arrangement according to any of claims 15 to 17, characterised in that the storage container (9) for the material-gas-mixture is directly connected to the housing (2'') of the degassing device (2') and directly coupled thereto, respectively.

19. The installation or arrangement according to any of claims 15 to 18, characterised in that the degassing device (2') and the vacuum pump (3) are in communication with each other and with the flushing water source (10) via conduits provided with valves (5 to 7).

20. The installation or arrangement according to any of claims 15 to 19, characterised in that the degassing device (2') and the vacuum pump (3) are connected to a cooling medium source (11), in particular a cooling water source.

21. The installation or arrangement according to any of claims 15 to 20, characterised in that a preprogrammable automatic electric control device (12) is provided, which is connected to a current meter (17) of the rotor driving motor (2''') and to a vacuum control valve (7), whereby the evacuation and aspiration, respectively, of the gas, in particular the air, from the gas, in particular air-tapping pipe (21), in particular the axis of rotational movement of the material-gas-mixture, may be controlled as a function of the power input of the motor (2''') generating the rotation of the material-gas-mixture in the housing (2'') containing the rotor (18).

22. The installation or arrangement according to claim 21, characterised in that the control device (12) is programmed to adjust an actual value to a nominal value of the power input of the motor generating the rotation of the material-gas-mixture, which value is lower by 10-75%, in particular by 20-40%, preferably by about 30% than that in operation with a suspension free of gas or air, and water, respectively.

23. The installation or arrangement according to any of claims 15 to 22, characterised in that an electric control means (12), in particular a control device preprogrammed by a computer program, is provided, which is connected to the pump motor (1''') and its speed counter (15), respectively, as well as to its speed control (16), to the motor (2''') of the degassing device, to the vacuum pump (3), to the flushing valve (5), to the vacuum irrigation valve (6), to the vacuum adjusting valve (7), to the measuring device (13) for the filling level of the storage container (9), to the valve (14) for feeding the mixture into the storage container and to the measuring device (17) for the amount pumped.

24. The installation or arrangement according to any of claims 15 to 23, characterised in that the degassing device (2') consists, in addition to the special housing (2''), of a rotor (18) supported therein, only a single cage-like rotor (18) being supportea in an approximately cylindrical housing (2'') and an axially extending gas-tapping pipe (21,21',26 and 41, respectively), equipped with at least one orifice (20, 29 and 40, respectively) being arranged approximately at the center of the rotor, to the axially extending interior space of which pipe, approximately coninciding with the axis of rotation of the rotor, a gas-tapping channel (32) is joined at the bottom and at the end facing away from the mixture inlet, respectively, which channel may be connected to the vacuum pump (3).

25. The installation or arrangement according to claim 24, characterised in that the material-gas-mixture inlet into the special housing (2'') and to the rotor (18), respectively is provided on the top to a lateral position and that the material discharge (19) is provided on the periphery of the housing (2'').

26. The installation or arrangement according to any of claims 15 to 25, characterised in that the rotor (18) consists of cross-axially extending annular disks (22) as well as of ledges (24) extending parallel to the axis and attached to the periphery of these disks.

27. The installation or arrangement according to any of claims 15 to 26, characterised in that the disks are formed as three-armed stars (22) having upended ledges (24) with approximately radially directed lateral longitudinal faces (25) attached thereto.

28. The installation or arrangement according to claim 27, characterised in that the star-like disks (22,23) are formed propeller-like in particular by torsion of the star arms (23).

29. The installation or arrangement according to any of claims 15 to 28, characterised in that the rotor (18) is eccentrically supported within the housing (2'').

30. The installation or arrangement according to any of claims 15 to 29, characterised in that the gas-tapping pipe (21,21') consists of a supporting pipe (26) located therein and provided with orifices, of a sieve-pipe (27) drawn over this and of a retaining pipe (29) drawn thereover and having orifices (28) in the region of the supporting orifices (20), and in that the gas-tapping pipe (21,21') is closed at the end facing away from the connection to the vacuum pump (3).

31. The installation or arrangement according to any of claims 15 to 30, characterised in that a centrifugal governor (36), a centrifugal valve (36') and a solenoid valve, respectively, is connected to the rotor (18), in particular to its lower end, which centrifugal governor and centrifugal valve or solenoid valve, respectively, lets the vacuum come into effect starting with a predetermined rotor speed.

32. The installation or arrangement according to any of claims 15 to 31, characterised in that, for the purpose of an optimum delivery of the pump (1, 1', 1'') over its entire range of operation and control as well as for the purpose of separating gas and air, respectively, at a largely minimum consumption of power and current, respectively, an automatic control device, in particular preprogrammable by a computer program, for example an electronic unit (22), is provided, which is in communication with a consistometer for the preset mixture as well as with ajusting means for their delivery volume and delivery height, on the one hand, and with speed controls of the driving motor (2''') for moving the rotor (18), the pump motor (1''') and the motor of the vacuum pump (3), on the other hand, so that these motors may be controlled as a function of the consistency of the mixture as well as the preset delivery volume and delivery height.

33. A process for the treatment of in particular medium and high consistency material-gas-mixtures to be pumped, preferably gas-, in particular air-containing fibrous material suspensions, the separation of the gas being done prior to the pumping operation, using the installation or arrangement according to any of claims 15 to 32, characterised in that the material-gas-mixture is subjected to rotation for the separation of gas within a special container (2) separated from the pump housing (1) preceding the pumping operation, while gas is sucked off and a vacuum is established, respectively, approximately in the axis of rotational movement of the material-gas-mixture.

34. The process according to claim 33, characterised in that the material-gas-mixture is subjected to rotation in a special container (2) located behind a storage container (9) with respect to the direction of movement of the mixture.

35. The process according to claim 33 or claim 34, characterised in that the material-gas-mixture is subjected to high-speed rotation of in particular between 1,200 and 3,400 rpm, preferably about 3,000 rpm.

36. The process according to any of claims 33 to 35, characterised in that the material-gas-mixture is fed to the special container (2) from the top or from the side, the gas discharge is effected in the axis of the rotor (18) and the discharge of the virtually degassed mixture to the pump (1) arranged separately from this container (2) is effected on the outer jacket of this container.

37. The process according to any of claims 33 to 36, characterised in that the material-gas-mixture is fed directly to the rotating mixture from a storage container (9), in particular gravity tower, or from an integrated pipe system.

38. The process according to any of claims 33 to 37, characterised in that for the purpose of starting the degassing and pumping operation, the degassing device and the stuffing box of the vacuum pump are first of all flushed with water.

39. The process according to any of claims 33 to 38, characterised in that the evacuation and the aspiration of the gas from the axis of rotational movement of the material-gas-mixture is controlled as a function of the power input of the motor (2''') generating the rotation of the material-gas-mixture in the special container (2).

40. The process according to claim 39, characterised in that the nominal value to be adjusted to of the power input of the rotor generating the rotation of the material-gas-mixture is lower by 10-75%, in particular by 20-40%, preferably by about 30% than that required when operating with a suspension free of gas and with water, respectively.

41. The process according to claim 38, characterised in that first of all the flushing valve (5) is opened, then the motor (1''') of the pump is started at closed control circuit, afterwards the motor (2''') for the degassing device is activated, the valve (4) for the cooling water supply is opened, the vacuum pump (3) is switched on and the vacuum irrigation valve (6) is opened, the vacuum control valve (7) remaining closed at closed control circuit.

42. The process according to claim 38 or claim 41, characterised in that the vacuum control is released subsequently to the flushing operation.

43. The process according to claim 42, characterised in that the flushing valve (5) is closed, whereupon the vacuum control valve (7) is actuated for switching on the vacuum control and the vacuum pump (3), respectively, and finally, when a predetermined level of material-gas-mixture in the storage container (9) has been reached, the level control acting on the automatic control (12) is released.

44. The process according to any of claims 33 to 43, characterised in that for the purpose of switching the degassing and pumping operation off, first of all the vacuum pump (3) is switched off, the vacuum irrigation valve (6) and the vacuum control valve (7) are closed, thereafter the flushing valve (5) is opened and the pumping motor (1''') is switched off and finally the flushing valve (5) is closed, the degassing motor (2''') is switched off and the cooling valve (4) is closed.

45. The process according to any of claims 33 to 44, characterised in that the speeds of rotational movement of the mixture and of the associated driving engine, respectively, and of the pump as well as of that of a pump generating the vacuum as a function of the consistency of the mixture being fed in, their preset delivery volume and delivery height are coordinated with each other, in particular by means of an automatic control device preprogrammed by a computer program, in such a way that the pump has an optimal delivery volume over its entire range of operation and control, while the separation of gas, in particular air, is effected at a largely minimum consumption of power and current, respectively.

## Revendications

1. Dispositif pour la séparation continue de gaz, en particulier d'air, des mélanges matière-gaz à être pompés, en particulier à moyenne ou à haute consistance, en particulier des suspensions de matière fibreuse, comportant une caisse (2'') et un rotor (18) à rotation rapide logé là-dedans faisant au moins 1200 tours par minute, l'entrée pour le mélange matière-gaz étant prévue en haut jusqu'à la position horizontalement latérale, et la dérivation de matière étant prévue à la périphérie de la caisse, caractérisé en ce que, en vue de la préparation d'un mélange matière-gaz séparément du procédé de pompage avant son introduction dans une pompe (1), un seul rotor (18) en forme de cage est prévu et en ce que dans le centre du rotor un tuyau de soutirage de gaz (21,21',26 ou bien 41) de cours axial, pourvu d'au moins un orifice (20,29 ou bien 40), est disposé, à l'extrémité (42) opposée à l'entrée duquel un passage de soutirage de gaz (32 ou bien 43) se joint.

2. Dispositif selon la revendication 1, caractérisé en ce que la longueur ou bien l'hauteur du rotor est beaucoup plus grande que le diamètre extérieur du rotor, de sorte que sur le raccord du dispositif (2) à un récipient (9) à être évacué, contenant le mélange matière-gaz, ce rotor (18) s'étende en partie dans ce récipient.

3. Dispositif selon l'une des revendications 1 ou 2, caractérisé en ce que le tuyau de soutirage de gaz (41) est pourvu d'un orifice à l'extrémité supérieure et est fixe par rapport au rotor (18).

4. Dispositif selon la revendication 3, caractérisé en ce que le passage de soutirage de gaz (42) est étanché par rapport à l'arbre rotatif du rotor (18) et fixe.

5. Dispositif selon l'une des revendications 1 ou 2, caractérisé en ce que le tuyau de soutirage de gaz (21,26) est pourvu d'orifices (20,29) dans la chemise et est arrangé pour se tourner avec le rotor (18).

6. Dispositif selon l'une des revendications 1 à 5, caractérisé en ce que le rotor (18) en forme de cage présente un seul cage formé par des disques (22,22') annulaires, arrangés transversalement à l'axe, en particulier en forme d'étoile, et par des listeaux (24) parallèles à l'axe, attachés a la périphérie des disques.

7. Dispositif selon la revendication 6, caractérisé en ce que les disques (22,23) en forme d'étoile ayant les listeaux (24) de chant attachés sur eux sont pourvus de surfaces longitudinales latérales (25) dirigées approximativement radialement, dont la largeur, mesurée en direction radiale, est considérablement inférieure à la longueur du rayon extérieur du rotor.

8. Dispositif selon l'une des revendications 1 à 5, caractérisé en ce que le rotor (18) présente respectivement des disques (44) en forme d'anneau de cercle, arrangés approximativement transversalement à son axe de rotation et avantageusement des secteurs d'un anneau de cercle (46), arrangés au moins en partie en spirale, attachés à des listeaux (45) préférablement parallèles à l'axe (Fig. 19).

9. Dispositif selon la revendication 8, caractérisé en ce que les secteurs d'un anneau de cercle (46) ayant les listeaux (45) de chant attachés sur eux sont pourvus de surfaces longitudinales latérales (47) dirigées approximativement radialement (Fig. 19).

10. Dispositif selon l'une des revendications 8 ou 9, caractérisé en ce qu'au centre du rotor (18), approximativement à partir de l'extrémité intérieure (48) du tuyau de soutirage de gaz il y a une étoile à ailette (49) tournant avec la cage du rotor, s'étendant parallèlement à l'axe, dont le diamètre est beaucoup plus petit que le diamètre extérieur du rotor (Fig. 19, Fig. 18).

11. Dispositif selon l'une des revendication 1 a 10, caracterisé en ce que le rotor (18) est logé dans la caisse (2'') de façon excentrique.

12. Dispositif selon l'une des revendication 1 à 11, caractérisé en ce que le diamètre intérieur de la caisse (2'') du rotor est beaucoup plus grand que le diamètre extérieur du rotor (18), son rapport au diamètre extérieur du rotor par exemple étant de 3 à 1 jusqu'à 1,5 à 1, avantageusement de 2,5 à 1.

13. Dispositif selon l'une des revendications 1 à 12, caractérisé en ce que entre la chemise extérieure du tuyau de soutirage de gaz (41) et l'arbre (50) du rotor, formé creux dans la région de ce tuyau (41) aussi bien que respectivement son palier (51) et ses garnitures (52,52'), un espace (53) est prévu qui communique respectivement avec une source d'eau de refroidissement (54) et la pompe à vide (3), de sorte que l'eau de refroidissement (54) nécessaire pour le refroidissement de la garniture (52') servant pour étancher le tuyau de soutirage de gaz (41) fixe par rapport à l'arbre du rotor, soit amenable pendant l'opération et puisse finalement etre épuisée par la pompe à vide (3).

14. Dispositif selon la revendication 13, caractérisé en ce que l'eau de refroidissement est aussi prévue pour le refroidissement et la lubrification du palier à glissement (55) tournant avec l'arbre et guidant le tuyau de soutirage de gaz (41) par la suite comme eau de rinçage pour le tuyau de soutirage de gaz (41).

15. Installation utilisant un dispositif selon l'une des revendication 1 à 14, caractérisée en ce qu'une pompe (1'), en particulier une pompe centrifuge, ayant une caisse (1'') séparée de la caisse (2'') du dispositif de dégazage (2') est prévue et est jointe, au côté d'épuisement, à la dérivation de matière du dispositif de dégazage, et en ce qu'une pompe à vide est jointe au tuyau de soutirage de gaz.

16. Installation selon la revendication 15, caractérisée en ce que des moteurs de commande (respectivement 1''' et 2''') séparés sont associés à la pompe (1') et au dispositif de dégazage (2').

17. Installation selon l'une des revendications 15 ou 16, caractérisée en ce qu'une pompe à vide (3) est raccordée au dispositif de dégazage (2') ayant un axe de rotation du mélange à dégazer approximativement vertical, en particulier à sa face inférieure ou bien au côté du récipient spécial (2'') opposé à l'entrée.

18. Installation selon l'une des revendications 15 à 17, caractérisée en ce que le récipient d'accumulation pour le mélange matière-gaz est raccordé directement à la caisse (2'') du dispositif de dégazage (2') ou bien directement relié avec cette caisse.

19. Installation selon l'une des revendications 15 à 18, caractérisée en ce que le dispositif de dégazage (2') et la pompe à vide (3) communiquent l'un avec l'autre et avec une source d'eau de rinçage (10) par des conduits pourvus de soupapes (5 à 7).

20. Installation selon l'une des revendications 15 à 19, caractérisée en ce que le dispositif de dégazage (2') et la pompe à vide (3) sont raccordés à une source d'agent de refroidissement (11), en particulier une source d'eau de refroidissement.

21. Installation selon l'une des revendications 15 à 20, caractérisée en ce qu'un appareil de commande ou bien appareil de réglage (12) électrique automatique programmable en avance est prévu, qui est relié à un ampèremètre (17) du moteur (2''') du rotor et à une servo-soupape à vide (7), ce qui rend l'évacuation ou bien l'aspiration du gaz, en particulier de l'air du tuyau (21) à soutirage de gaz, en particulier d'air, en particulier de l'axe du mouvement à rotation du mélange matière-gaz, réglable en fonction de la puissance absorbée par le moteur (2''') engendrant la rotation du mélange matière-gaz dans la caisse (2'') contenant le rotor (18).

22. Installation selon la revendication 21, caractérisée en ce que l'appareil de commande ou bien de réglage (12) est programmé pour une valeur de consigne à ajuster pour la puissance absorbée par le moteur engendrant la rotation du mélange matière-gaz, valeur qui est de 10-75%, en particulier de 20-40%, préférablement approximativement de 30%, inférieure à celle pendant l'opération respectivement avec une suspension exempt de gaz ou bien d'air, et avec eau.

23. Installation selon l'une des revendications 15 à 22, caractérisée en ce qu'un appareillage (12) de commande ou bien de réglage électrique, en particulier un appareil de commande ou bien de réglage programmable en avance par un programme d'ordinateur est prévu, qui est relié avec la pompe-moteur/le moteur de la pompe (1''') ou bien son compteur de tours (15) aussi bien qu'avec son réglage de nombre de tours (16), avec le moteur (2''') du dispositif de dégazage, avec la pompe à vide (3), avec la soupape de vidange (5), avec la soupape d'irrigation de vide (6), avec la servo-soupape de vide (7), avec le mesureur d'hauteur de remplissage (13) du récipient d'accumulation (9), avec la soupape (14) pour admettre le mélange dans le récipient d'accumulation et le mesureur (17) pour la quantité pompée.

24. Installation selon l'une des revendications 15 à 23, caractérisée en ce que le dispositif de dégazage (2') consiste, outre la caisse spéciale (2''), en un rotor (18) logé là-dedans, un seul rotor (18) en forme de cage étant logé dans une caisse (2'') approximativement cylindrique et un tuyau de soutirage de gaz (21,21',26 ou bien 41) de cours axial, pourvu d'au moins un orifice (20,29 ou bien 40) étant arrangé approximativement au centre du rotor, à l'intérieur de cours axial duquel un passage de soutirage de gaz (32) se joint en bas ou bien à l'extrémité opposée à l'entrée du mélange approximativment coincident avec l'axe de rotation du rotor, passage qui peut être relié avec la pompe à vide (3).

25. Installation selon la revendication 24, caractérisée en ce que l'entrée pour le mélange matière-gaz dans la caisse spéciale (2'') ou bien au rotor (18) est prévue en haut jusqu'à une position latérale et la dérivation de matière est prévue à la périphérie de la caisse (2'').

26. Installation selon l'une des revendications 15 à 25, caractérisée en ce que le rotor (18) consiste en des disques (22) annulaires, arrangés transversalement à l'axe, et en de listeaux (24) parallèles à l'axe, attachés à la périphérie des disques.

27. Installation selon l'une des revendication 15 à 26, caractérisée en ce que les disques sont construits comme des étoiles (22) à trois bras ayant des listeaux (24) de chant attachés sur elles avec des surfaces longitudinales latérales (25).

28. Installation selon la revendication 27, caractérisée en ce que les disques (22,23) en forme d'étoile sont formés en forme d'hélice, en particulier par torsion des bras (23) de l'étoile.

29. Installation selon l'une des revendications 15 à 28, caractérisée en ce que le rotor (18) est logé excentriquement dans la caisse (2'').

30. Installation selon l'une des revendications 15 à 29, caractérisée en ce que le tuyau de soutirage de gaz (21,21') consiste en un tube support (26) situé à l'intérieur, pourvu d'orifices, en un tuyau perforé (27) tiré pardessus et en un tube de soutien (29) tiré au-dessus de celui-ci, présentant des orifices (28) dans la zone des orifices de support (20), et en ce que le tuyau de soutirage de gaz (21,21') est fermé à l'extrémité éloignée du raccord à la pompe à vide (3).

31. Installation selon l'une des revendications 15 à 30, caractérisée en ce que respectivement un régulateur centrifuge (36), une soupape centrifuge (36') et une électrovanne, qui rend le vide efficace à partir d'un nombre de tours prédéterminé du rotor, est relié avec le rotor (18), en particulier avec son extrémité inférieur.

32. Installation selon l'une des revendications 15 à 31, caractérisée en ce que, en vue d'un refoulement optimal par la pompe (1,1',1'') dans toute sa zone d'opération et de réglage, aussi bien qu'en vue d'une séparation des gaz ou bien d'air, avec une consommation de puissance et de courant largement minimale, un dispositif de commande automatique, en particulier programmable en avance par un programme d'ordinateur, par exemple une unité électronique, est prévu, qui communique d'une part avec un consistomètre pour le mélange prédéterminé aussi bien qu'avec des dispositifs d'ajustage de leur refoulement et leur hauteur manométrique et d'autre part avec des régulateurs de vitesse du moteur de commande (2''') pour le mouvement du rotor (18), du moteur de pompe (1''') et du moteur de la pompe à vide (3), de sorte que ces moteurs puissent être accordés en fonction de la consistance de mélange aussi bien que du refoulement et de la hauteur manométrique prédéterminés.

33. Processus de traitement de mélanges matière-gaz à être pompés, en particulier à moyenne ou à haute consistance, préférablement des suspensions de matière fibreuse, contenant de gaz, en particulier d'air, une séparation du gaz étant effectuée avant l'operation de pompage, en utilisant l'installation selon l'une des revendications 15 à 32, caractérisé en ce que le mélange matière-gaz est soumis à une rotation dans un récipient spécial (2) séparé de la caisse (1) de la pompe pour la séparation de gaz séparée précédant l'operation de pompage, pendant que respectivement du gaz est aspiré et un vide est établi approximativement dans l'axe de rotation du mélange matière-gaz.

34. Processus selon la revendication 33, caractérisé en ce que le mélange matière-gaz est soumis à la rotation dans un récipient spécial (2) positionné derrière le récipient d'accumulation (9) par rapport à la direction de mouvement du mélange.

35. Processus selon l'une des revendications 33 ou 34, caracterisé en ce que le mélange matière-gaz est soumis à une rotation à grand nombre de tours, en particulier entre 1200 et 3400 tr/min, préférablement d'environ 3000 tr/min.

36. Processus selon l'une des revendications 33 à 35, caractérisé en ce que le mélange matière-gaz est admis dans le récipient spécial (2) d'en haut ou du côté, l'évacuation du gaz est exécutée dans l'axe du rotor (18) et la dérivation du mélange largement dégazé vers la pompe (1) arrangée séparement de ce récipient (2) est effectuée à la chemise extérieure du récipient.

37. Processus selon l'une des revendications 33 à 36, caractérisé en ce que le mélange matière-gaz est amené au mélange rotatif directement d'un récipient d'accumulation (9), en particulier d'une tour de gravitation, ou d'un système de tuyaux intégré.

38. Processus selon l'une des revendications 33 à 36,caractérisé en ce que, en vue de mettre en marche le procédé de dégazage et de pompage, le dispositif de dégazage et la boîte à étoupes de la pompe à vide sont d'abord rincés avec d'eau.

39. Processus selon l'une des revendications 33 à 38, caractérisé en ce que l'évacuation ou bien l'aspiration du gaz de l'axe de mouvement à rotation du mélange matière-gaz est réglée en fonction de la puissance absorbée par le moteur (2''') engendrant la rotation du mélange matière-gaz dans le récipient spécial (2).

40. Processus selon la revendication 39, caractérisé en ce que la valeur de consigne à ajuster pour la puissance absorbée par le rotor engendrant la rotation du mélange matière-gaz est de 10-75%, en particulier de 20-40%, préférablement approximativement de 30% inférieure à celle pendant l'opération respectivement avec une suspension exempt de gaz, et avec eau.

41. Processus selon la revendication 38, caractérisé en ce que d'abord la soupape de vidange (5) est ouverte, ensuite le moteur de la pompe (1''') est mis en marche avec circuit de réglage bouclé, après cela le moteur (2''') pour le dispositif de dégazage est mis en marche, la soupape (4) d'admission d'eau de refroidissement est ouverte, la pompe à vide (3) est connectée et la soupape d'irrigation à vide (3) est ouverte, la servo-soupape à vide (7) restant fermée avec circuit de réglage bouclé.

42. Processus selon l'une des revendications 38 ou 41, caractérisé en ce que le réglage de vide est relaché une fois le rinçage a été effectué.

43. Processus selon la revendication 42, caractérisé en ce que la soupape de vidange (5) est fermée, après quoi la servo-soupape à vide (7) est opérée pour connecter respectivement le réglage de vide et la pompe à vide (3), et finalement la régulation de niveau produisant un effet sur l'appareil de commande automatique (12) est relâchée quand le mélange matière-gaz dans le récipient d'accumulation (9) a atteint un certain niveau prédéterminé.

44. Processus selon l'une des revendications 33 à 43, caractérisé en ce que, pour arreter le procédé de dégazage et de pompage, la pompe à vide (3) est d'abord déconnectée, la soupape d'irrigation à vide (6) et la servo-soupape à vide (7) sont fermées, ensuite la soupapge de vidange (5) est ouverte et le moteur (1''') de la pompe est déconnecté et finalement la soupape de vidange (5) est fermée, le moteur à dégazage (2''') est déconnecté et la soupape à refroidissement est fermée.

45. Processus selon l'une des revendications 33 à 44, caractérisé en ce que les nombres de tours respectivement du mouvement à rotation du mélange et du moteur de commande associé et de la pompe aussi bien que celui d'une pompe engendrant un vide sont ajustés les uns avec les autres en fonction de la consistance du mélange amené, son refoulement et hauteur manométrique prédéterminés, en particulier par un appareil de commande automatique programmé en avance par un programme d'ordinateur, de sorte que la pompe refoule d'une façon optimale dans toute sa zone d'operation et de réglage, pendant que la séparation de gaz, en particulier d'air s'effectue avec une consommation de puissance et de courant largement minimale.
